# EUROPEAN PATENT APPLICATION

(11) **EP 4 582 227 A1**
(43) Date of publication of application: **09.07.2025**
(21) Application number: 23860402.9
(22) Date of filing: 30.08.2023
(51) Int. Cl.: B25J 15/00

(54) **ROBOT SYSTEM, AUTOMATED PRESSING SYSTEM, PROGRAM, AND PRESSING JIG**

(30) Priority: 02.09.2022 JP 2022140333
(71) Applicant: DAIKIN INDUSTRIES, LTD., Osaka-shi, Osaka 530-0001 (JP); The University of Tokyo, Bunkyo-ku, Tokyo 113-8654 (JP)
(72) Inventor: ASANO, Yuki, Tokyo 113-8654 (JP); SHIOMI, Junichiro, Tokyo 113-8654 (JP); OKADA, Kei, Tokyo 113-8654 (JP); YONEDA, Satoru, Osaka-Shi, Osaka 530-0001 (JP); HIGASHI, Masahiro, Osaka-Shi, Osaka 530-0001 (JP); KISHIKAWA, Yosuke, Osaka-Shi, Osaka 530-0001 (JP); SAGISAKA, Shigehito, Osaka-Shi, Osaka 530-0001 (JP); SEKI, Toyomitsu, Osaka-Shi, Osaka 530-0001 (JP)
(74) Representative: Hoffmann Eitle
(86) International application number: PCT/JP2023/031471
(87) International publication number: WO 2024/048640

(57) **Abstract**

A robot system includes an end effector configured to hold a workpiece, an operation device connected to the end effector and configured to operate the end effector, and a control device configured to control an operation of the operation device. The control device controls: a step of assembling the workpiece in a form in which a pressing-target object is sandwiched by arranging the pressing-target object on a first plate jig arranged at a set position and thereafter placing a second plate jig on the first plate jig through operating the end effector; and a step of conveying the workpiece to press position at which the pressing-target object is pressed by holding the pressing-target object, the first plate jig, and the second plate jig altogether as the workpiece with the end effector.

## Description

### TECHNICAL FIELD

The present disclosure relates to a robot system, a pressing automation system, a program, and a pressing-purpose jig**.**

### BACKGROUND ART

Conventionally, in order to analyze characteristics of a sample, such as a polymer, a polymer (a pressing-target object) is pressed by a press apparatus, and the pressed polymer (a press-molded product) is evaluated. In such an experiment for analyzing a polymer, pressing and evaluation of a polymer is performed a plurality of times while changing the condition parameters of the experiment. Therefore, a large burden is imposed on an operator. Under such a circumstance, there is a demand for development of a system in which a polymer is conveyed using a robot and pressing of the polymer is automatically performed.

Patent Document 1 discloses a pressing automation system in which a metal plate is conveyed to a press die unit by a robot and the metal plate is pressed, although this is not a system for sample evaluation.

### RELATED ART DOCUMENTS

### PATENT DOCUMENT

Patent Document 1: Japanese Patent No. 6983437

### SUMMARY OF THE INVENTION

### PROBLEMS TO BE SOLVED BY THE INVENTION

The present disclosure provides a technique for reducing a work burden on an operator and improving work efficiency.

### EFFECTS OF THE INVENTION

According to an aspect of the present disclosure, there is provided a robot system including: an end effector configured to hold a workpiece; an operation device connected to the end effector and configured to operate the end effector; and a control device configured to control an operation of the operation device. The control device controls: a step of assembling the workpiece in a form in which a pressing-target object is sandwiched by arranging the pressing-target object on a first plate jig arranged at a set position and thereafter placing a second plate jig on the first plate jig through operating the end effector; and a step of conveying the workpiece to a press position at which the pressing-target object is pressed by holding the pressing-target object, the first plate jig, and the second plate jig altogether as the workpiece with the end effector.

According to the above-described robot system, it is possible to smoothly perform pressing at the press position, to reduce a work burden on a user, and to improve work efficiency.

The control device controls a step of conveying the workpiece to a disassembly position with the end effector by holding the workpiece pressed at the press position, and a step of separating the second plate jig from the first plate jig by operating the end effector at the disassembly position. Thus, the robot system can smoothly disassemble a pressed workpiece at the disassembly position, and can further promote the reduction of a burden on the user and the improvement of work efficiency.

The press position includes a first position at which the pressing-target object is pressed while being heated, and in the step of conveying the workpiece, the control device causes the workpiece to be conveyed to the first position and, after the workpiece is being pressed, causes the workpiece to be conveyed to the disassembly position. Thus, the robot system can press a pressing-target object (polymer) while heating the pressing-target object at the first position, and then immediately return the workpiece to the disassembly position to obtain a press-formed product.

The press position includes a first position at which the pressing-target object is pressed while being heated and a second position at which the pressing-target object is pressed while being cooled, and in the step of conveying the workpiece, the control device causes the workpiece to be conveyed to the first position first, and after the workpiece is pressed at the first position, causes the workpiece to be conveyed from the first position to the second position. Thus, the robot system can press a pressing-target object (polymer) while heating a pressing-target object at the first position and then press the pressing-target object while cooling the pressing-target object at the second position. As a result, the robot system can accurately create a press-formed product in accordance with a target temperature.

The end effector includes an imaging device configured to capture an image of a target object and transmit imaging information to the control device, and the control device controls the end effector to move to a target position based on information of position coordinates of the target object that is held in advance, and corrects a positional deviation of the end effector with respect to the target position based on the imaging information. Thus, the robot system can accurately perform gripping of a target object with the end effector.

The target object includes a feature point of a workbench on which the first plate jig and the second plate jig are placed or a feature point installed at the press apparatus. Thus, the robot system can smoothly correct the position of the end effector so that the end effector can be located at the feature point.

In the step of assembling the workpiece, the control device causes the second plate jig to be moved in parallel to a surface direction of the first plate jig so as to face the first plate jig. Thus, the robot system can smoothly assemble the first plate jig and the second plate jig, suppressing a displacement between the first plate jig and the second plate jig.

One of the first plate jig and the second plate jig has a frame body, and the other of the first plate jig and the second plate jig has a guide surface guided by the frame body, and in the step of assembling the workpiece, the control device causes the guide surface to be into contact with the frame body when causing the second plate jig to be moved with respect to the first plate jig. Thus, even when the second plate jig is displaced from the first plate jig at the time of moving the second plate jig, the robot system can guide and position the relative positions of the first plate jig and the second plate jig by the frame bodies and the guide surface.

The press position has a concave arrangement space that matches a shape of a distal end of the first plate jig in an entering direction in which the workpiece enters the press position, and in a step of conveying the workpiece to the press position, the control device positions the workpiece by causing the workpiece to be moved in a horizontal direction and bringing the workpiece into contact with a guide wall constituting the concave arrangement space. Thus, when moving the workpiece to the arrangement concave space, the robot system can guide the workpiece by the guide wall and accurately position the workpiece at the press position.

In a step of assembling the workpiece, the control device causes the pressing-target object to be placed on the first plate jig by causing a cylindrical body to be placed on the first plate jig and subsequently causing the pressing-target object to be placed inside the cylindrical body, and after the cylindrical body is taken out, the control device causes the second plate jig to be arranged on the first plate jig. Thus, the robot system can favorably prevent the pressing-target object from scattering out of the first plate jig in the step of assembling the workpiece.

The end effector includes a pair of gripping bodies configured to be moved close to and away from each other under an operation command of the control device, and the control device switches a jig having a grip configured to be gripped by the pair of gripping bodies to another jig having a grip in an operation of arranging the pressing-target object on the first plate jig and an operation of overlaying the second plate jig on the first plate jig. Thus, the robot system can assemble the workpiece easily and in a short time by switching the jigs between an operation of arranging a pressing-target object on the first plate jig and an operation of overlaying the second plate jig on the first plate jig.

The plurality of jigs include a supply cup that accommodates the pressing-target object, and a fork jig having a plurality of forks configured to enter under the first plate jig or the second plate jig and lift the first plate jig or the second plate jig. Thus, the robot system can easily perform an operation of arranging the pressing-target object on the first plate jig and an operation of holding the first plate jig and the second plate jig.

The plurality of jigs include a temperature detector configured to detect a temperature of the workpiece, and the control device causes the temperature detector to be gripped by the pair of gripping bodies and inserted into the workpiece arranged at the press position. Thus, the robot system can measure a temperature of the pressing-target object by the temperature detector at the time of pressing a workpiece, and can perform pressing at an appropriate temperature.

Another aspect of the present disclosure, there is provided a pressing automation system includes a robot including an end effector configured to hold a workpiece and an operation device connected to the end effector and configured to operate the end effector, a press apparatus configured to press a pressing-target object accommodated in the workpiece conveyed by the robot, and a control device configured to control the robot and the press apparatus. The control device controls: a step of assembling the workpiece in a form in which a pressing-target object is sandwiched by arranging the pressing-target object on a first plate jig arranged at a set position and thereafter placing a second plate jig on the first plate jig through operating the end effector; a step of conveying the workpiece from the set position to the press apparatus by holding the pressing-target object, the first plate jig, and the second plate jig altogether as the workpiece with the end effector; and a step of pressing the pressing-target object by pressing the first plate jig and the second plate jig by the press apparatus.

Another aspect of the present disclosure, there is provided a program configured to cause a computer to function as: a robot commander configured to output to a robot system a command to assemble a workpiece in a form in which a pressing-target object is sandwiched by arranging the pressing-target object on a first plate jig arranged at a set position and thereafter placing a second plate jig on the first plate jig through operating an end effector at a set position at which the workpiece is set, and convey the workpiece from the set position to a press apparatus by holding the pressing-target object, the first plate jig, and the second plate jig altogether as the workpiece with the end effector; a press commander configured to output to the press apparatus a command to press the pressing-target object; and an analysis commander configured to output to an analysis apparatus a command to analyze the pressed pressing-target object.

Another aspect of the present disclosure, there is provided a pressing-purpose jig that is conveyed to a press apparatus while holding a pressing-target object and is pressed by the press apparatus, the pressing-purpose jig including a first plate jig on which the pressing-target object is arranged at a set position, and a second plate jig that forms a workpiece in a form in which the pressing-target object is sandwiched between the first plate jig and the second plate jig by being placed on the first plate jig on which the pressing-target object is arranged. The pressing-purpose jig in a form in which the pressing-target object is sandwiched between the first plate jig and the second plate jig is configured to be conveyed to the press apparatus, and the pressing-purpose jig is configured to press the pressing-target object when the press apparatus presses the first plate jig and the second plate jig the pressing-purpose jig is arranged at the press apparatus.

### BRIEF DESCRIPTION OF THE DRAWINGS

[FIG. 1] FIG. 1 is a schematic explanatory diagram illustrating an overall configuration of a sample evaluation system according to an embodiment.
[FIG. 2] FIG. 2 is a block diagram illustrating modes of communication between a control apparatus and each apparatus.
[FIG. 3] FIG. 3 is a perspective view illustrating an overall configuration of a pressing automation system.
[FIG. 4] FIG. 4 is an enlarged perspective view illustrating gripping of an end effector of a robot system.
[FIG. 5] FIG. 5(A) is a plan view illustrating gripping of the end effector and a fork jig, and FIG. 5(B) is a side view illustrating gripping of the end effector and the fork jig.
[FIG. 6] FIG. 6 is a perspective view illustrating a robot system and a plurality of jigs.
[FIG. 7] FIG. 7(A) is a plan view illustrating the plurality of jigs on a workbench, and FIG. 7(B) is a plan view illustrating a part of the workbench in an enlarged manner.
[FIG. 8] FIG. 8(A) is a plan view illustrating pressing-purpose jigs, and FIG. 8(B) is a perspective view illustrating a state in which the pressing-purpose jigs are assembled into a workpiece.
[FIG. 9] FIG. 9(A) is a perspective view illustrating a supply cup, and FIG. 9(B) is a perspective view illustrating a scatter prevention cup.
[FIG. 10] FIG. 10 is a perspective view illustrating a thermoelectric couple jig.
[FIG. 11] FIG. 11 is a side view illustrating a press machine body of a heat press apparatus.
[FIG. 12] FIG. 12 is a perspective view illustrating a placement portion of the heat press apparatus.
[FIG. 13] FIG. 13 is a block diagram illustrating functional blocks of the control apparatus.
[FIG. 14] FIG. 14 is a flowchart illustrating a processing flow of a sample evaluation method.
[FIG. 15] FIG. 15 is a flowchart illustrating an operation flow when the robot system grips one of the plurality of jigs.
[FIG. 16] FIG. 16 is a flowchart illustrating steps of assembling a workpiece.
[FIG. 17] FIG. 17(A) is a side view illustrating an operation when the workpiece is placed on the heat press apparatus, and FIG. 17(B) is a plan view illustrating an operation when a workpiece is placed on the heat press apparatus.
[FIG. 18] FIG. 18(A) is a view illustrating a press-formed product of a first example, and FIG. 18(B) is a view illustrating a press-formed product of a second example.
[FIG. 19] FIG. 19 is a block diagram illustrating a method of setting experimental parameters for sample evaluation.

### DESCRIPTION OF EMBODIMENTS

Hereinafter, embodiments for implementing the present disclosure will be described with reference to the drawings. In the drawings, the same components are denoted by the same reference numerals, and a duplicate description thereof may be omitted. Note that the X-axis direction, the Y-axis direction, and the Z-axis direction used in the following description are axial directions that intersect perpendicularly to each other. The X-axis direction and the Y-axis direction are horizontal directions, and the Z-axis direction is a vertical direction.

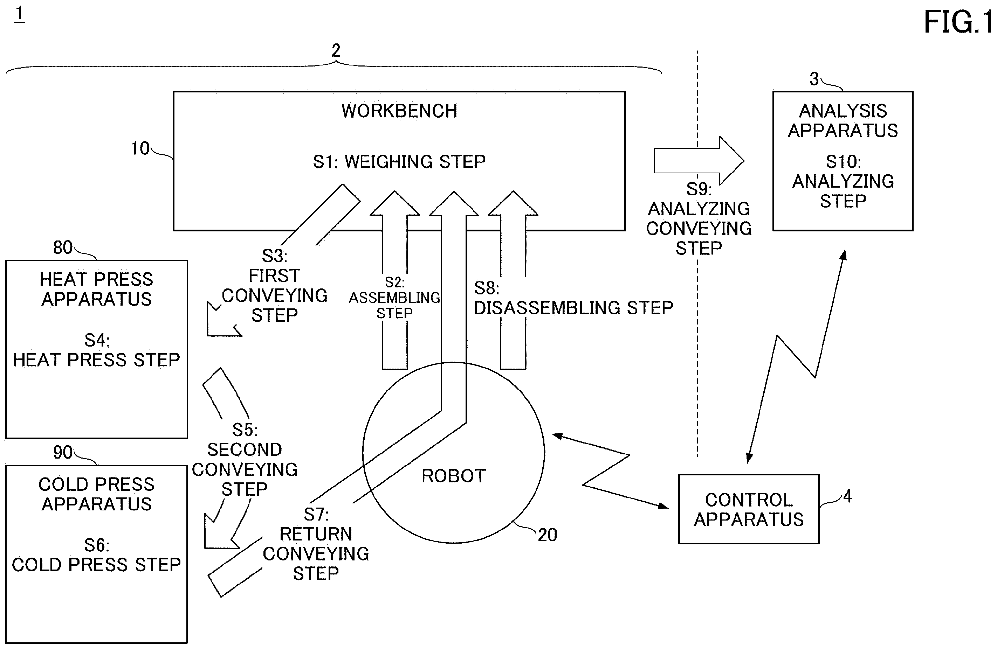

In order to evaluate a polymer (resin) as a sample, a sample evaluation system 1 according to an embodiment includes a pressing automation system 2 that conveys a polymer to a plurality of work places and performs work such as pressing, and an analysis apparatus 3 that evaluates a produced press-formed product, as illustrated in FIG. 1. The sample evaluation system 1 also includes a control apparatus (control device) 4 that controls each of the apparatuses of the pressing automation system 2 and the analysis apparatus 3.

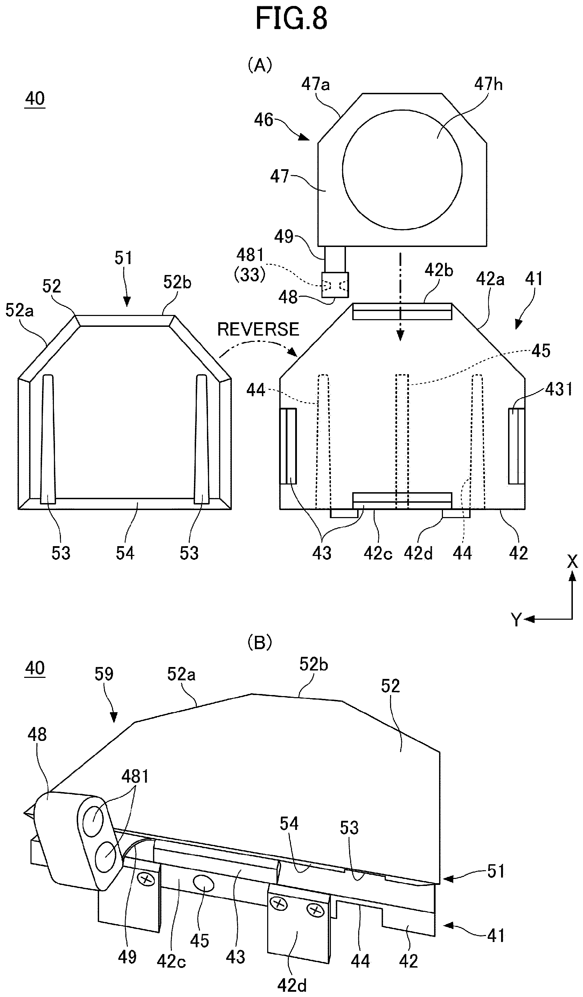

The pressing automation system 2 includes, for example, a workbench 10, a robot 20, a heat press apparatus 80, and a cold press apparatus 90. In the pressing automation system 2, the robot 20 assembles a workpiece containing a polymer (see also FIG. 8(B)) on a workbench 10. In the pressing automation system 2, the robot 20 sequentially conveys workpieces to two types of press apparatus (the heat press apparatus 80 and the cold press apparatus 90), and each press apparatus presses the polymer to produce a press-formed product. The pressing automation system 2 is not limited to including two types of press apparatus (the heat press apparatus 80 and the cold press apparatus 90), and may include one type of press apparatus or three or more types of apparatuses. The pressing automation system 2 may be applied to a press apparatus that does not heat or cool a polymer, or may be configured to press a polymer by adjusting a temperature to a plurality of temperatures in one press apparatus.

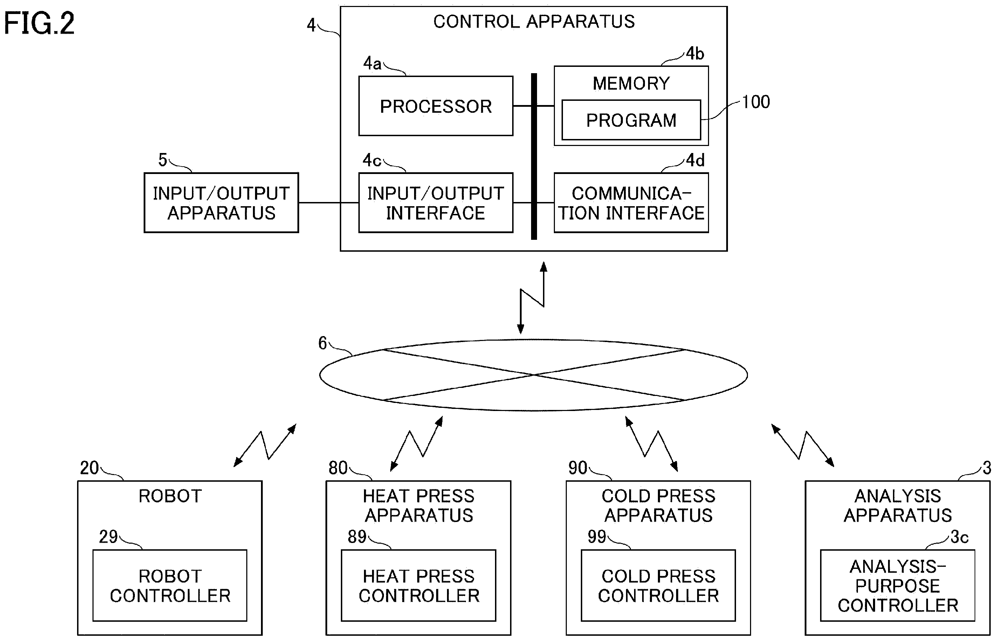

As illustrated in FIG. 2, the control apparatus 4 includes one or more processors 4a, a memory 4b, an input/output interfaces 4c, and a communication interface 4d, and is configured as a computer that controls the entire sample evaluation system 1. The one or more processors 4a are one or a combination of a plurality of central processing units (CPUs), graphics processing units (GPUs), application specific integrated circuits (ASICs), field-programmable gate arrays (FPGAs), circuits formed of a plurality of discrete semiconductors, and the like. The memory 4b includes a nonvolatile memory and a volatile memory (for example, a compact disc, a digital versatile disc (DVD), hard disk, flash memory, and the like), and constitutes a storage unit of the control apparatus 4.

The input/output interface 4c is connected to an input/output apparatus 5, which is an operator interface that can be operated and checked by an operator of the sample evaluation system 1. As the input/output apparatus 5, for example, a monitor, a mouse, a keyboard, a touch panel (including a tablet terminal, a smartphone, and the like), a speaker, a microphone, and the like can be appropriately adopted.

The communication interface 4d performs information communication between each of the robot 20, the heat press apparatus 80, the cold press apparatus 90, and the analysis apparatus 3, and the control apparatus 4 via a communication network 6 capable of wired communication or wireless communication. The communication network 6 may be any one of a wide area network (WAN), a local area network (LAN), a personal area network (PAN), and the like, or a combination thereof. Examples of WANs include the Internet, examples of LANs include IEEE 802.11 and Ethernet (registered trademark), and examples of PANs include Bluetooth (registered trademark) and near field communication (NFC).

The robot 20 is provided with a robot controller 29 that communicates information with the control apparatus 4 and operates the robot 20. The heat press apparatus 80 is provided with a heat press controller 89 that communicates information with the control apparatus 4 and operates the heat press apparatus 80. The cold press apparatus 90 is provided with a cold press controller 99 that communicates information with the control apparatus 4 and operates the cold press apparatus 90. The analysis apparatus 3 is provided with an analysis-purpose controller 3c that communicates information with the control apparatus 4 and operates the analysis apparatus 3.

The memory 4b of the control apparatus 4 stores a program 100 for controlling the sample evaluation system 1. The program 100 is read and executed by the processor 4a, thereby forming a plurality of functional units for controlling the entire sample evaluation system 1 in the control apparatus 4. In the control apparatus 4, the respective functional units formed under the execution of the program 100 outputs control commands to the pressing automation system 2 (the robot 20, the heat press apparatus 80, and the cold press apparatus 90) and the analysis apparatus 3 at appropriate timings. In other words, the program 100 functions as bridge software that achieves the creation of press-formed products by the pressing automation system 2 in conjunction with the analysis of the press-formed products by the analysis apparatus 3.

Although FIG. 2 illustrates one computer as the control apparatus 4 of the sample evaluation system 1, software may be installed in a plurality of computers, and the plurality of computers may execute the same or different partial processing of the software. In this case, the distributed computing may be adopted in which the computers communicate with each other to execute the processing. As an example, the control apparatus 4 can be configured by a computer for a robot operating system (ROS) connected to each apparatus and a plurality of control computers connected to the computer of the ROS. The control apparatus 4 of the sample evaluation system 1 may be configured to process information transmitted from a terminal device with one or more computers provided on the cloud and transmit the processing result to the terminal device.

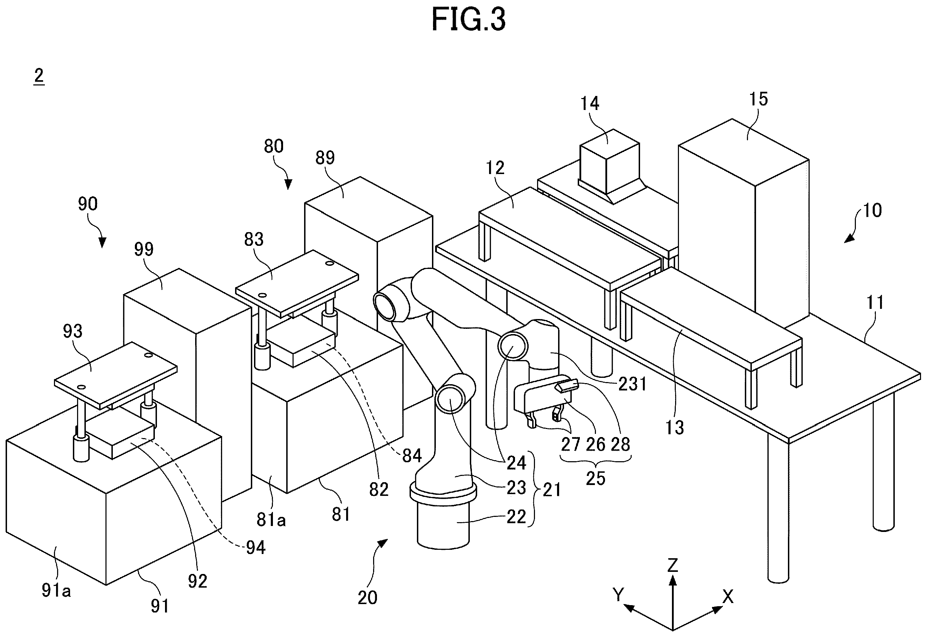

As illustrated in FIG. 3, the pressing automation system 2 includes a workbench 10, the heat press apparatus 80, and the cold press apparatus 90, which are arranged around the robot 20. The workbench 10, the heat press apparatus 80, and the cold press apparatus 90 are installed so as to form an L shape in a plan view (see also FIG. 1). The workbench 10 is formed in a rectangular shape extending long along the Y-axis direction at a position away from the robot 20 in the X-axis direction. The heat press apparatus 80 and the cold press apparatus 90 are installed at positions away from the robot 20 in the Y-axis direction so as to be arranged along the X-axis direction. The arrangement of the workbench 10 and the apparatuses of the pressing automation system 2 is not limited to an L-shape, and may be set at an operator's discretion.

The workbench 10 forms a work place where the robot 20 assembles and disassembles a workpiece containing a polymer in the pressing automation system 2. For example, the workbench 10 includes a base 11, a work-purpose small table 12 installed on the base 11, and a conveying-purpose small table 13 installed on the base 11 so as to be aligned with the work-purpose small table 12 in the Y-axis direction. The workbench 10 may be a single table (the base 11 in which the work-purpose small table 12 and the conveying-purpose small table 13 are seamlessly connected in series).

The base 11 includes a top plate having a rectangular, flat shape in a plan view and a plurality of leg portions supporting the top plate. The base 11 is installed in such a manner that the long side of the top plate is along the Y-axis direction. On the top plate of the base 11, a weighing device 14, a removal apparatus 15, and the like are installed, in addition to the work-purpose small table 12 and the conveying-purpose small table 13.

The work-purpose small table 12 is a table for assembling and disassembling a workpiece containing a polymer. The pressing automation system 2 includes a plurality of types of jigs (targets for gripping) 19 for assembling and disassembling a workpiece and are provided on the upper surface of the work-purpose small table 12. The plurality of types of jigs 19 will be described in detail later. The conveying-purpose small table 13 forms a place where a press-formed product that is produced in the pressing automation system 2 is separated from the jig 19 (a lower plate jig 41) and is kept on standby until the press-formed product is conveyed to the analysis apparatus 3.

The work surface (upper surface) of the work-purpose small table 12 and the work surface (upper surface) of the conveying-purpose small table 13 are set at a height at which an end effector 25 of the robot 20 can reach. The base 11, the work-purpose small table 12, and the conveying-purpose small table 13 may include an adjuster (not illustrated) capable of adjusting the height and parallelism of each upper surface (for example, a level adjuster).

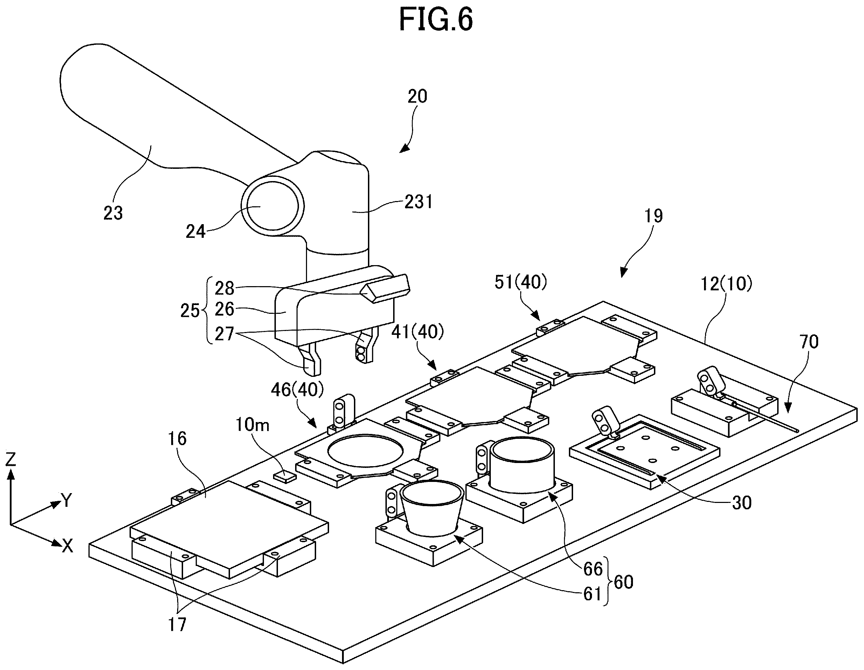

The weighing device 14 is installed at a position adjacent to the work-purpose small table 12, and weighs a polymer as a pressing-target object. For example, the weighing device 14 includes a box-shaped case, and a measurer for measuring a weight of a polymer is provided on the bottom surface of the case. The measurer is connected to the control apparatus 4 via the communication network 6, and automatically transmits measurement information (a weight of a polymer) to the control apparatus 4. The surface of the case of the weighing device 14 on the side close to the robot 20 is open so that the end effector 25 of the robot 20 can enter the case. For example, the robot 20 tilts a container of a granulated polymer, with a supply cup 61 (see FIG. 6) being placed on the measurer. The supply cup 61 is one of the jigs 19 and will be described later. The control apparatus 4 supplies an appropriate amount of polymer to the supply cup 61 by instructing an operation of the robot 20 while monitoring the measurement information of the measurer.

The removal apparatus 15 is installed at a position adjacent to the conveying-purpose small table 13, and when a press-formed product is adhered to the jig 19, the removal apparatus 15 peels the press-formed product from the jig 19 and takes out the press-formed product. As the removal apparatus 15, a conventional die cutting device, ejector device, or the like can be applied.

The robot 20 of the pressing automation system 2 includes an operation device 21 and the end effector 25 that is moved to a target three-dimensional position by the operation device 21. The robot 20 operates the operation device 21 and the end effector 25 based on a control command of the control apparatus 4. Therefore, in the present embodiment, a system in which the control apparatus 4 and the robot 20 are combined is also referred to as a "robot system 20A".

The operation device 21 of the robot 20 is configured as a vertical articulated type including a base 22, a plurality of arms 23 arranged on the base 22, and a plurality of joints 24 connecting the arms 23 to each other. Three or more (for example, seven in the present embodiment) arms 23 are provided, and each arm 23 has a wrist 231 on the distal end side.

The plurality of joints 24 are provided between the arms 23 adjacent to each other, and move the arm 23 on the distal end side in relation to the arm 23 on the base 22 side. The robot 20 includes a joint motor in each of the base 22 and the joints 24 (or the arms 23). The robot 20 includes a plurality of motor drivers that supply electric power to the joint motors under the control of the robot controller 29, and operates the joints 24 independently.

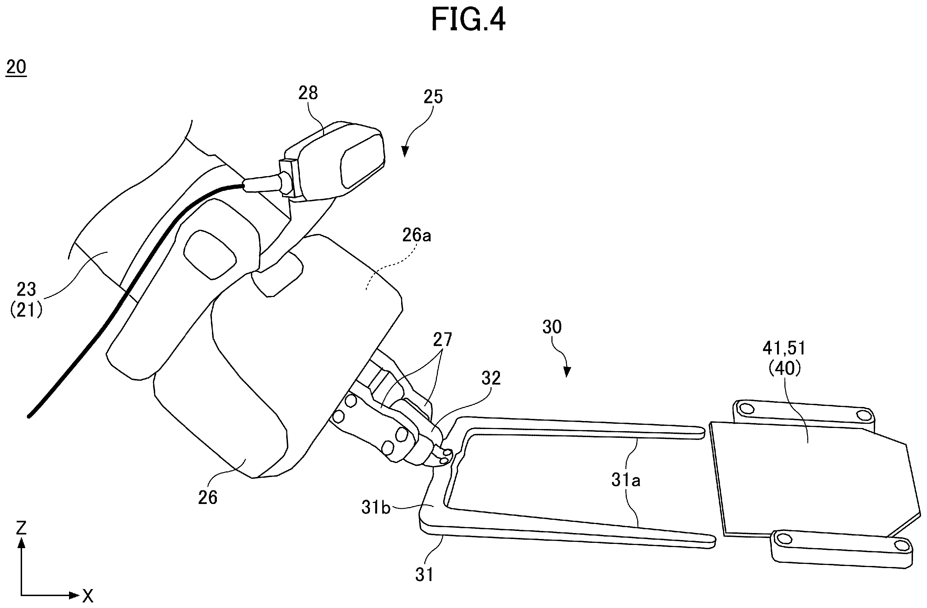

As illustrated in FIG. 4, the end effector 25 of the robot 20 is attached to the distal end of a series of the plurality of arms 23 (the wrist 231). The end effector 25 according to the present embodiment employs a clamp mechanism that grips the jig 19, which is a gripping-target object, with a set (pair) of gripping bodies 27. Specifically, the end effector 25 includes a rectangular parallelepiped housing 26 fixed to the wrist 231, and the pair of gripping bodies 27 is arranged on a distal end surface (tip surface) of the housing 26. A gripping body operation device 26a that operates the pair of gripping bodies 27 is provided in the housing 26. The gripping body operation device 26a includes a motor, a plurality of gears, and the like (not illustrated), and moves the pair of gripping bodies 27 closer together or away from each other along the longitudinal direction of the distal end surface, under the control of the robot controller 29.

The pair of gripping bodies 27 includes base end portions 271 accommodated in the housing 26, middle portions 272 each of which is continuous with a tip end of the base end portion 271 and is inclined in a direction of being narrowed inward, and protruding end portions 273 each of which is continuous with a tip end of the middle portion 272 and extends in parallel to the base end portion 271. When the pair of gripping bodies 27 is closed by the gripping body operation device 26a, the pair of gripping bodies 27 can grip a gripping-target object arranged between the protruding end portions 273 and move the gripping-target object under the operation of the operation device 21. The gripping-target object gripped by the pair of gripping bodies 27 is any one of a plurality of jigs 19 (described later) arranged on the workbench 10, and a fork jig 30 is illustrated in FIG. **4****.**

In the robot system 20A, a holding structure 33 is formed in the end effector 25 and the plurality of jigs 19. Each of the plurality of jigs 19 has a structure (a grip 32 of the fork jig 30 in FIG. 4) held by the pair of gripping bodies 27.

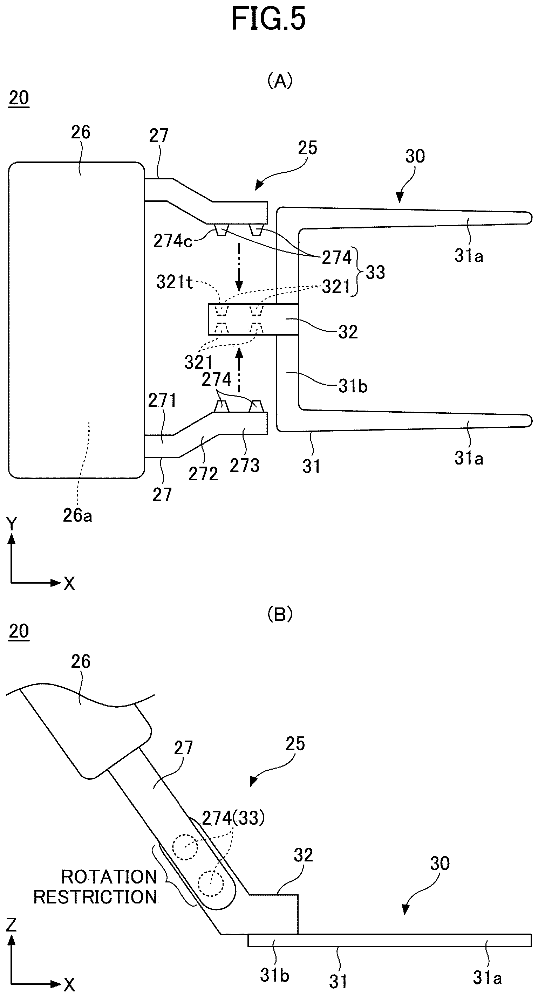

As illustrated in FIGS. 5(A) and 5(B), each of the gripping bodies 27 of the end effector 25 has a plurality of (two) gripping-purpose protrusions 274 on the inner facing surface of the protruding end portion 273, serving as part of the holding structure 33. Each of the gripping-purpose protrusions 274 is integrally formed with the gripping body 27 by a metal material. Each of the gripping-purpose protrusions 274 protrudes short from the facing surface of each of the gripping bodies 27, and the outer peripheral surface 274c thereof is formed in a conical shape that tapers from the facing surface of one of the gripping bodies 27 connected to the gripping-purpose protrusions 274 to the other gripping body 27 (in the protruding direction). The two gripping-purpose protrusions 274 are provided side by side along the protruding direction of the protruding end portion 273.

The grip 32 of the fork jig 30 is projected obliquely from the upper surface of the fork main body 31. The grip 32 is formed of a metal material in a wide block shape, and has rigidity so as not to be deformed even in a state of being gripped by the pair of gripping bodies 27. The grip 32 includes a plurality of (two) gripping-purpose recesses 321 recessed in each of the pair of side surfaces, serving as the other part of the corresponding holding structure 33. The inner peripheral surface 321t of each gripping-purpose recess 321 is formed in a tapered shape (conical funnel shape) in which the diameter decreases from the opening in the depth direction. The inclination of the inner peripheral surface 321t substantially matches the inclination of the outer peripheral surface 274c of the gripping body 27. The two gripping-purpose recesses 321 are provided side by side along the protruding direction of the grip 32.

To grip the target jig 19 (the fork jig 30 in FIG. 5), the robot 20 positions the pair of gripping bodies 27 so as to face both side surfaces of the grip 32, and then brings the gripping bodies 27 close to each other. When the gripping bodies 27 are close to each other, the gripping-purpose protrusions 274 enter the gripping-purpose recesses 321 respectively, while the conical outer peripheral surfaces 274c of the gripping-purpose protrusions 274 are being guided by the tapered inner peripheral surfaces 321t of the gripping-purpose recesses 321. Thus, the gripping-purpose protrusions 274 and the gripping-purpose recesses 321 are fitted to each other, and the opposing surfaces of the pair of gripping bodies 27 come into contact with both side surfaces of the grip 32 to hold the grip 32 therebetween. Moreover, in a state where the pair of gripping bodies 27 hold the grip 32, as illustrated in FIG. 5(B), the two gripping-purpose protrusions 274 and the two gripping-purpose recesses 321 are engaged with each other on each of both side surfaces. For this reason, the holding structure 33 can restrict the rotation of the grip 32 (that is, the gripping-target object (jig 19) being gripped) with respect to the end effector 25. Therefore, even when a load is applied from the main body of the jig 19 or the like, the end effector 25 can firmly grip the jig 19.

Returning to FIG. 4, in the robot system 20A according to the present embodiment, a camera (imaging unit) 28 is installed in the housing 26 of the end effector 25. The camera 28 is a compound-eye imaging device, captures an image of a portion ahead of the pair of gripping bodies 27, and transmits each piece of imaging information to the control apparatus 4 (or the robot controller 29). The control apparatus 4 recognizes a marker 10m or the like on the workbench 10 based on each piece of imaging information transmitted from the camera 28. The control apparatus 4, in principle, operates the plurality of joints 24 based on a three-dimensional target position (position coordinates) that is set in advance to move the end effector 25. When the end effector 25 approaches the three-dimensional target position, the control apparatus 4 corrects the movement of the end effector 25 based on the three-dimensional position extracted from each piece of imaging information. Accordingly, the robot system 20A can accurately guide the end effector 25 to a target indicator (for example, the center line of the grip 32) of the gripping-target object (the jig 19) and stably grip the gripping-target object by the pair of gripping bodies 27.

Next, the plurality of jigs 19 prepared in the pressing automation system 2 will be described in detail. As illustrated in FIG. 6, the robot system 20A moves the end effector 25 relative to the work-purpose small table 12, and assembles a workpiece containing a polymer by using the plurality of jigs 19 that are set on the work-purpose small table 12.

A fork jig 30, pressing-purpose jigs 40, a cup jig 60, and a thermoelectric couple jig (temperature detector) 70 are set in advance on the work-purpose small table 12 as a plurality of jigs 19. The pressing-purpose jigs 40 are main jigs that make up a workpiece containing a polymer, and include a lower plate jig (first plate jig) 41, an intermediate plate jig 46, and an upper plate jig (second plate jig) 51. The cup jig 60 is a jig for placing a polymer on the lower plate jig 41, and includes the supply cup 61 and a scatter prevention cup 66. Further, a punching-purpose conveyance table 16 for disassembling a workpiece containing a press-formed product after pressing and conveying the press-formed product to the removal apparatus 15 is installed in the work-purpose small table 12 in advance.

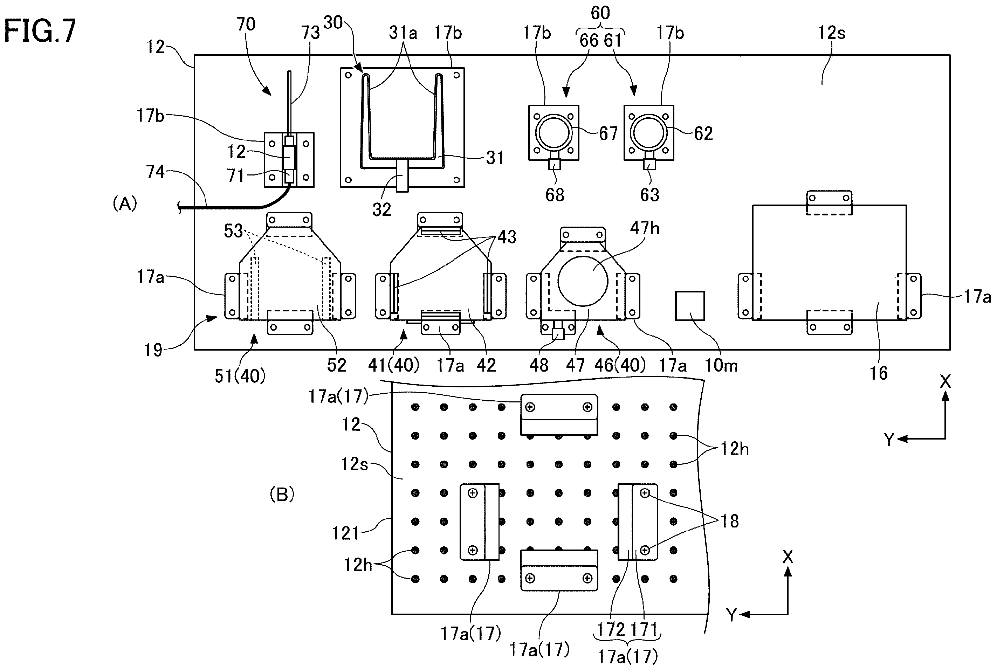

As illustrated in FIGS. 6 and 7(A), the work-purpose small table 12 has a rectangular top plate 121, and a work surface 12s on which the punching-purpose conveyance table 16 and the jigs 19 can be set is formed on the top plate 121. On the side closer to the robot 20 in the direction along the short side of the work-purpose small table 12 (the X-axis direction), the upper plate jig 51, the lower plate jig 41, the intermediate plate jig 46, and the punching-purpose conveyance table 16 are arranged in this order in the negative Y-axis direction. The thermoelectric couple jig 70, the fork jig 30, the scatter prevention cup 66, and the supply cup 61 are arranged in this order in the negative Y-axis direction on the side away from the robot 20 in the direction along the short side of the work-purpose small table 12. The jigs 19 can of course be arranged in an order at an operator's discretion.

A plurality of holders 17 for holding the punching-purpose conveyance table 16 and respective jigs 19 are installed on the work surface 12s. Each holder 17 is screwed to the top plate 121 by screwing a plurality of fixing screws 18 into a plurality of screw holes 12h formed on the work surface 12s through through holes (not illustrated) of each holder 17. The plurality of screw holes 12h are formed at regular intervals (for example, 30 mm), and are arranged in a matrix form in which a plurality of screw holes are arranged in the X-axis direction and the Y-axis direction as a whole.

Each holder 17 is formed in an appropriate shape in accordance with the shapes of the punching-purpose conveyance table 16 and each jig 19. For example, as illustrated in FIG. 7(B), to hold the upper plate jig 51, four holders 17a each having a first step portion 171 fixed by the fixing screw 18 and a second step portion 172, which is continuous with the first step portion 171 and is formed lower than the first step portion 171, are used.

Two of the four holders 17a are fixed at positions at which both side portions of the upper plate jig 51 in the X-axis direction (side portions opposite to the side portions on the installation side of the robot 20) can be supported, and the remaining two holders 17a are fixed at positions at which both side portions of the upper plate jig 51 in the Y-axis direction can be supported. The upper plate jig 51 is configured to stand by, when it is in a set state, in a state of being slightly floated from the work surface 12s by the lower surface of the upper plate jig 51 being supported by the second step portions 172 of the respective holders 17a while the side edges of the upper plate jig 51 are close to or in contact with the first step portions 171. The lower plate jig 41 and the punching-purpose conveyance table 16 are also held by four holders 17a fixed to the work surface 12s in accordance with the shapes thereof, similarly to the upper plate jig 51. Being held by three holders 17a on one side in the X-axis direction and both sides in the Y-axis direction, the intermediate plate jig 46 is held by a holder 17b that can cover the periphery of the grip 48.

For example, each of the fork jig 30, the cup jig 60 (the supply cup 61 and the scatter prevention cup 66), and the thermoelectric couple jig 70 is held by a rectangular parallelepiped holder 17b capable of covering the periphery thereof. The holder 17b has a holding groove corresponding to the shape of the jigs, and each of the jigs is accommodated in the holding groove and held horizontally immovable.

As illustrated in FIG. 4, in a state of being gripped by the end effector 25 of the robot 20, the fork jig 30 enters under the lower surface of the upper plate jig 51 by the movement of the end effector 25, thereby holding the upper plate jig 51. The fork jig 30 enters the lower surface side of the lower plate jig 41 by the movement of the end effector 25 in a state of being gripped by the end effector 25 of the robot 20, thereby holding the lower plate jig 41.

As described above, the fork jig 30 is configured by connecting the fork main body 31 and the grip 32. The fork main body 31 includes a pair of (two) rod-shaped flat plates 31a extending substantially parallel to each other, and a connecting flat plate 31b connecting the proximal portions of the pair of rod-shaped flat plates 31a. Each of the rod-shaped flat plates 31a is, for example, gradually narrowed from the connecting portion of the connecting flat plates 31b toward the distal end, and the distal end is formed into a rounded corner.

The grip 32 is fixed to the upper surface of the connecting flat plate 31b by an appropriate fixing means, such as screwing or welding. The grip 32 is inclined with respect to the fork main body 31 in an angle range of, for example, about 20° to 70°, and have two gripping-purpose recesses 321 on each of both side surfaces thereof as described above. Therefore, in a state where the fork jig 30 is accommodated in the holder 17b, the grip 32 protrudes upward in the negative X-axis direction (positive Z-axis direction) from the upper surface of the holder 17b. Thus, the end effector 25 can easily access the grip 32, and the fork jig 30 can be pulled out from the holder 17b by moving the end effector 25 upward while gripping the grip 32.

As illustrated in FIGS. 8(A) and 8(B), the pressing-purpose jigs 40 are jigs that make up a workpiece 59 containing a polymer by placing the polymer on the lower plate jig 41 and further stacking the intermediate plate jig 46 and the upper plate jig 51 in this order. FIG. 8(A) illustrates the lower plate jig 41 and the intermediate plate jig 46 for their upper surface (flat surface) side, whereas the upper plate jig 51 is illustrated for its lower surface side, for easy understanding.

In other words, the pressing automation system 2 according to the present embodiment holds a polymer in the vertical direction by sandwiching the polymer between the lower plate jig 41 and the upper plate jig 51. Further, the pressing automation system 2 prevents a polymer from slipping off in the lateral direction by the intermediate plate jig 46 arranged between the lower plate jig 41 and the upper plate jig 51. The pressing automation system 2 is configured to convey a polymer in the form of the workpiece 59 (in a state where the polymer is sandwiched between the lower plate jig 41 and the upper plate jig 51) to the heat press apparatus 80 and the cold press apparatus 90 and press the polymer in the sandwiched state at the time of pressing. The pressing-purpose jigs 40 may be configured such that the polymer is sandwiched between the lower plate jig 41 and the upper plate jig 51 without using the intermediate plate jig 46.

Specifically, the lower plate jig 41 includes a plate body 42 formed in a plate shape thicker than the fork main body 31 of the fork jig 30, and a plurality of frame bodies 43 protruding from the upper surface of the plate body 42. A pair of holding grooves 44 are formed in the lower surface of the lower plate jig 41. Further, a measurement-purpose hole 45 into which the thermoelectric couple jig 70 is inserted is formed at a middle position in the width direction of the lower plate jig 41.

The plate body 42 is formed in a polygonal shape (hexagonal shape) in which the trapezoidal shape on the distal end side (X-axis positive direction side) is continuous with the rectangular shape on the proximal end side (X-axis negative direction side), in a plan view. The distal end side of the plate body 42 has opposite sides 42a which are close to each other toward the distal end direction, and each opposite side 42a is continuous with the distal end side 42b.

In the upper surface of the plate body 42, a portion located inside the frame bodies 43 is formed in a flat shape. When the workpiece 59 is assembled, a polymer is placed on the placement region in this inside portion. A pair of stoppers 42d for restricting a movement of the plate body 42 in the distal direction are attached to the base end slide 42c of the plate body 42. The plate body 42 may have a shape in which a part thereof is cut out in order to reduce the weight of the entire lower plate jig 41.

The plurality of frame bodies 43 are provided on four sides (both sides in the X-axis direction and both sides in the Y-axis direction) of the plate body 42, and extend in parallel to the respective sides. Each frame body 43 has a slope 431 that is inclined toward the plate body 42 (downward) from the outside toward the inside.

The pair of (two) holding grooves 44 linearly extend from the base end side 42c of the plate body 42 in the distal end direction. The pair of rod-shaped flat plates 31a of the fork jig 30 enters the pair of holding grooves 44 from the open portion of the base end side 42c. Each of the holding grooves 44 is formed to be slightly wider than the rod-shaped flat plates 31a and to be gradually narrower toward the tip end, and can accommodate most of each of the rod-shaped flat plates 31a. The lower plate jig 41 is supported by the fork jig 30 inserted into the pair of holding grooves 44 in a state being maintained to be horizontal.

The measurement-purpose hole 45 extends linearly inside the plate body 42 from the base end side 42c in the distal end direction. The detector 73 of the thermoelectric couple jig 70 is inserted into the measurement-purpose hole 45 when the workpiece 59 is placed at the press position of the heat press apparatus 80 or the press position of the cold press apparatus 90. Thus, the temperature of the placement region of the plate body 42 (in other words, the temperature of the polymer supplied to the placement region) can be measured.

The intermediate plate jig 46 of the pressing-purpose jigs 40 is first arranged on the plate body 42 of the lower plate jig 41, thereby defining a polymer placement region. The intermediate plate jig 46 includes a plate body 47 having a plate shape thinner than the plate body 42 of the lower plate jig 41, and a grip 48 connected to the plate body 47 via a connection portion 49. A circular hole 47h for defining a placement region is formed in the plate body 47 of the intermediate plate jig 46.

Similarly to the plate body 42, the plate body 47 is formed in a polygonal shape (hexagonal shape) in which the trapezoidal shape on the distal end side (X-axis positive direction side) is continuous with the rectangular shape on the proximal end side (X-axis negative direction side), in a plan view. The plate body 47 is formed to be smaller than the plate body 42 in a plan view, and can be arranged inside the plurality of frame bodies 43. The distal end side of the plate body 47 has opposite sides 47a which are close to each other toward the distal end, and each opposite side 47a is continuous with the distal end side 47b.

The grip 48 protrudes in a direction orthogonal to the plane of the plate body 47 (Z-axis positive direction). The grip 48 is formed in a block shape, similarly to the grip 32 of the fork jig 30, and has a pair of (two) gripping-purpose recesses 481 on each side surfaces thereof. The gripping-purpose recesses 481 constitute one part of the holding structure 33 which the gripping-purpose protrusions 274 provided on the pair of gripping bodies 27 enter when the grip 48 is gripped by the end effector 25.

The upper plate jig 51 of the pressing-purpose jigs 40 is placed on the plate body 47 of the intermediate plate jig 46 after a polymer is supplied to the placement region of the lower plate jig 41. The upper plate jig 51 includes a plate body 52 having a thickness substantially equal to that of the lower plate jig 41. A pair of holding grooves 53 are formed in the lower surface of the upper plate jig 51.

The plate body 52 is formed in a polygonal shape (hexagonal shape) in which the trapezoidal shape on the distal end side (X-axis positive direction side) is continuous with the rectangular shape on the proximal end side (X-axis negative direction side), in a plan view. The distal end side of the plate body 42 has opposite sides 52a which are close to each other toward the distal end direction, and each opposite side 52a is continuous with the distal end side 52b. In the present embodiment, the shape of the plate body 52 of the upper plate jig 51 substantially matches the shape of the plate body 42 of the lower plate jig 41.

Each side of the plate body 52 is formed with a guide surface 54 inclined inward from the upper surface toward the lower surface. When the upper plate jig 51 is placed on the lower plate jig 41, the guide surface 54 of the plate body 52 comes into contact with the inclined surfaces 431 of the plurality of frame bodies 43 to guide the upper plate jig 51 to a relative position of with respect to the lower plate jig 41.

The pair of (two) holding grooves 53 linearly extend from the guide surface 54 on the base end side of the plate body 52 toward the distal end. The pair of rod-shaped flat plates 31a of the fork jig 30 enters the pair of holding grooves 53. The upper plate jig 51 is supported by the fork jig 30 inserted into the pair of holding grooves 53 in a state being maintained to be horizontal.

The pressing-purpose jigs 40 described above are assembled into the workpiece 59 as illustrated in FIG. 8(B) by the robot 20 (see FIG. 6). In the form of the workpiece 59, the intermediate plate jig 46 and the upper plate jig 51 overlap the lower plate jig 41, and the frame bodies 43 in the circumferential direction of the lower plate jig 41 and the guide surfaces 54 in the circumferential direction of the upper plate jig 51 brought closer to each other. Therefore, it is possible to regulate the displacement of the upper plate jig 51 in the surface direction with respect to the lower plate jig 41. A polymer is sandwiched between the plate body 42 of the lower plate jig 41 and the plate body 52 of the upper plate jig 51. The pressing automation system 2 can convey the lower plate jig 41, the intermediate plate jig 46, and the upper plate jig 51 in a form of the workpiece 59, into which these jigs are integrated, from the workbench 10 by holding the lower plate jig 41 with the robot 20 through the fork jig 30.

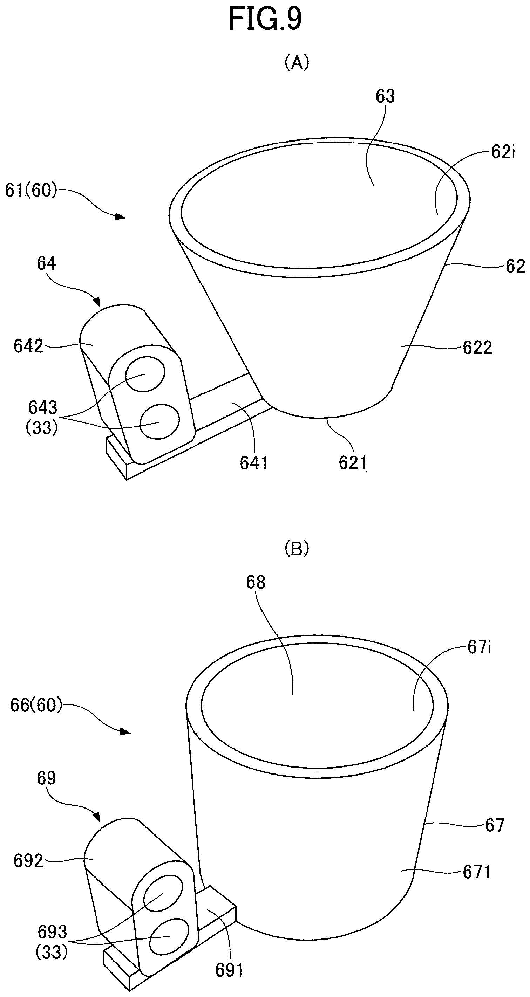

The supply cup 61 of the cup jig 60 includes a cup body 62 and a grip 64 connected to the outside of the cup body 62 as illustrated in FIG. 9(A), and is used to supply a polymer to the placement region of the lower plate jig 41.

The cup body 62 is formed by a circular bottom portion 621 and a conical side portion 622 which is inclined upward and outward from the edge of the bottom portion 621, and has an accommodation space 63 inside the bottom portion 621 and the side portion 622. In other words, an inner peripheral surface 62i of the cup body 62 forming the accommodation space 63 is formed in a tapered shape. Since the opening of the accommodation space 63 is wide, the cup body 62 can contain a polymer to be measured by the weighing device 14 (see FIG. 3) without spilling the polymer into the accommodation space 63.

The grip 64 has a coupling portion 641 coupled to the side portion 622 of the cup body 62 and a block portion 642 projecting from one end portion of the coupling portion 641 in a direction orthogonal to the bottom portion 621 of the cup body 62 (Z-axis positive direction), and has an L shape in a side view. The grip 64 also has a pair of (two) gripping-purpose recesses 643 on both side surfaces of the block portion 642, similarly to the grip 32 of the fork jig 30. The gripping-purpose recesses 643 makes up one part of the holding structure 33 which each of the gripping-purpose protrusions 274 provided on the pair of gripping bodies 27 enters when the grip 48 is gripped by the end effector 25.

As illustrated in FIG. 9(B), the scatter prevention cup 66 of the cup jig 60 has a cup body 67 and a grip 69 connected to the outside of the cup body 67. The scatter prevention cup 66 is arranged in the placement region of the lower plate jig 41 and prevents a polymer from scattering when the polymer is supplied by the supply cup 61.

The cup body 67 is formed of a cylindrical body 671 having no bottom portion, and has a penetration space 68 penetrating in the vertical direction (Z-axis direction) inside the cylindrical body 671. In other words, the inner peripheral surface 67i of the cup body 67 forming the penetration space 68 extends in the vertical direction with a constant inside diameter. A polymer is put from the supply cup 61 into the penetration space 68 of the cup body 67 arranged in the lower plate jig 41. At this time, the cup body 67 can prevent the polymer from scattering out of the cylindrical body 671. The member for preventing the polymer from scattering when the polymer is supplied to the lower plate jig 41 is not limited to the above-described configuration, and various configurations can be adopted. For example, the scatter prevention cup 66 may be configured in such a manner that a plate having substantially the same shape as the intermediate plate jig 46 is connected to the outer peripheral surface of the cylindrical body 671 and the plate is brought into contact with the intermediate plate jig 46. The plate enables the scatter prevention cup 66 to reliably prevent the cylindrical body 671 from falling.

The grip 69 has a coupling portion 691 coupled to the cylindrical body 671 of the cup body 67 and a block portion 692 protruding from one end of the coupling portion 691 in a direction parallel to the cylindrical body 671 (Z-axis positive direction), and has an L shape in a side view. The grip 69 is also has, similarly to the grip 32 of the fork jig 30, a pair of (two) gripping-purpose recesses 693 on both side surfaces of the block portion 692. The gripping-purpose recesses 693 constitute one part of the holding structure 33 which the gripping-purpose protrusions 274 provided on the pair of gripping bodies 27 enter when the grip 48 is gripped by the end effector 25.

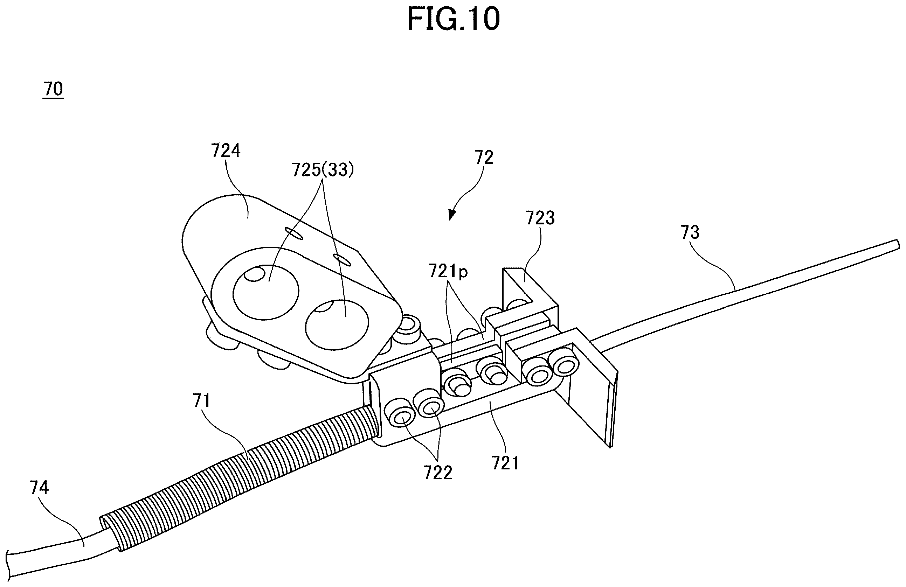

As illustrated in FIG. 10, when the workpiece 59 is placed on the heat press apparatus 80 or the cold press apparatus 90, the thermoelectric couple jig 70 is inserted into the measurement-purpose hole 45 of the lower plate jig 41 to measure the temperature of a polymer. The thermoelectric couple jig 70 includes a thermoelectric couple main body 71 and a grip 72 attached to the thermoelectric couple main body 71.

The thermoelectric couple main body 71 includes a rod-shaped detector 73 protruding in the distal end direction, and a harness 74 for supplying electric power to the detector 73, and the grip 72 is attached to a coupling portion between the detector 73 and the harness 74. A well-known temperature detector can be applied to the thermoelectric couple main body 71.

The grip 72 includes an attachment portion 721 externally mounted on the thermoelectric couple main body 71, a flange portion 723 protruding outward in the width direction at the distal end of the attachment portion 721, and a block portion 724 connected to the upper surface of the attachment portion 721 and inclined upward and in the proximal end direction. The attachment portion 721 has two parts 721p which can be divided along the axial direction of the thermoelectric couple main body 71, and is firmly fixed to the thermoelectric couple main body 71 by screwing the two parts 721p with a plurality of coupling screws 722.

The block portion 724 of the grip 72 is inclined upward in the proximal end direction, similarly to the grip 32 of the fork jig 30. Two gripping-purpose recesses 725, which serve one part of the holding structure 33, are provided on each of both side surfaces of the block portion 724. The thermoelectric couple jig 70 formed in such a manner is in a state where the grip 72 protrudes from the upper surface of the holder 17b in a state where the thermoelectric couple jig 70 is accommodated in the holder 17b, and thus the end effector 25 of the robot 20 can easily access the thermoelectric couple jig 70 (see FIG. 6).

As illustrated in FIGS. 6 and 7(A), a rectangular marker 10m is provided on the top plate of the work-purpose small table 12. The marker 10m serves as an imaging indicator (feature point) for correcting the coordinate positions of the jigs 19 when imaging is performed by the camera 28 mounted on the end effector 25 of the robot 20. The marker 10m may be an augmented reality (AR) marker having a three-dimensional position, and thus the robot controller 29 or the control apparatus 4 can recognize a three-dimensional position according to the position of the AR marker recognized by the imaging information. The marker 10m is not limited to the AR marker, and may be a mark (for example, a QR code (registered trademark) which can be extracted from the imaging information. The marker 10m is not limited to being installed on the workbench 10, and may be installed at a press position of a press apparatus (the heat press apparatus 80 or the cold press apparatus 90), for example.

Returning to FIG. 3, the heat press apparatus 80 and the cold press apparatus 90 for actually pressing a workpiece containing a polymer will be described. The heat press apparatus 80 includes a heat press machine body 81 and a heat press controller 89 (see FIG. 2) that controls the operation of the heat press machine body 81. The heat press controller 89 controls the operation of the heat press apparatus 80 based on a control command from the control apparatus **4.**

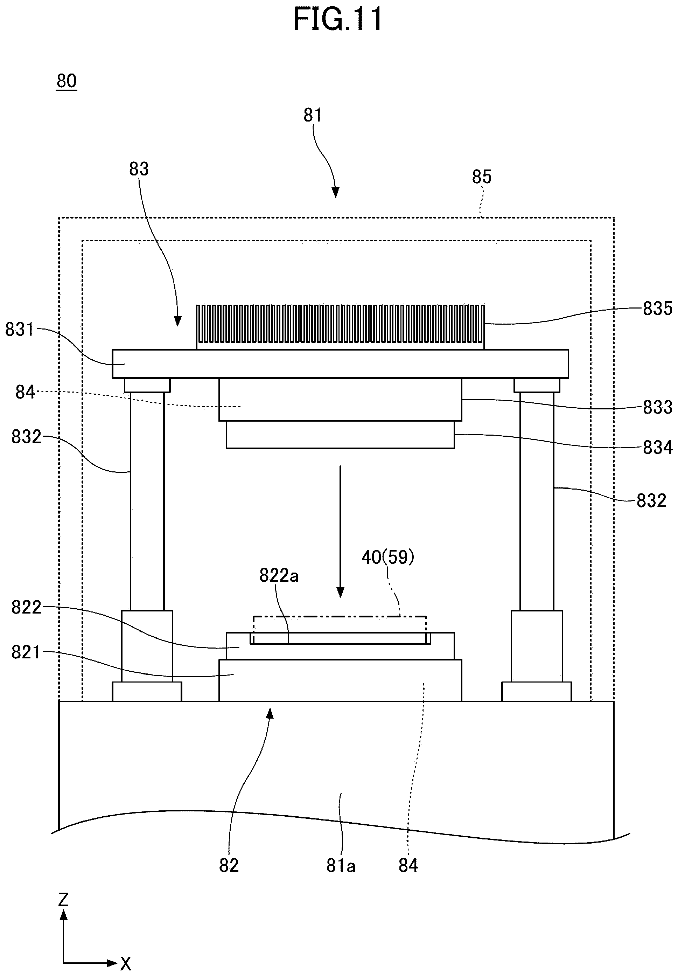

As illustrated in FIG. 11, the heat press machine body 81 includes a placement portion 82 that forms a press position (first position) for the workpiece 59 on the upper surface of the machine body housing 81a, and a press body 83 that can approach and separate from the placement portion 82. Further, a press operation mechanism (not illustrated) for operating the press body 83 is provided inside the machine body housing 81a. The heat press machine body 81 may include a cover 85 (see the dotted line in FIG. 11) that covers the placement portion 82 and the press body 83.

The placement portion 82 includes a fixing table 821 and a placement member 822 which is a portion fixed to the upper surface of the fixing table 821 and on which the workpiece 59 is directly placed. A heater mechanism 84 for heating the workpiece 59 via the placement member 822 is provided inside the fixing table 821.

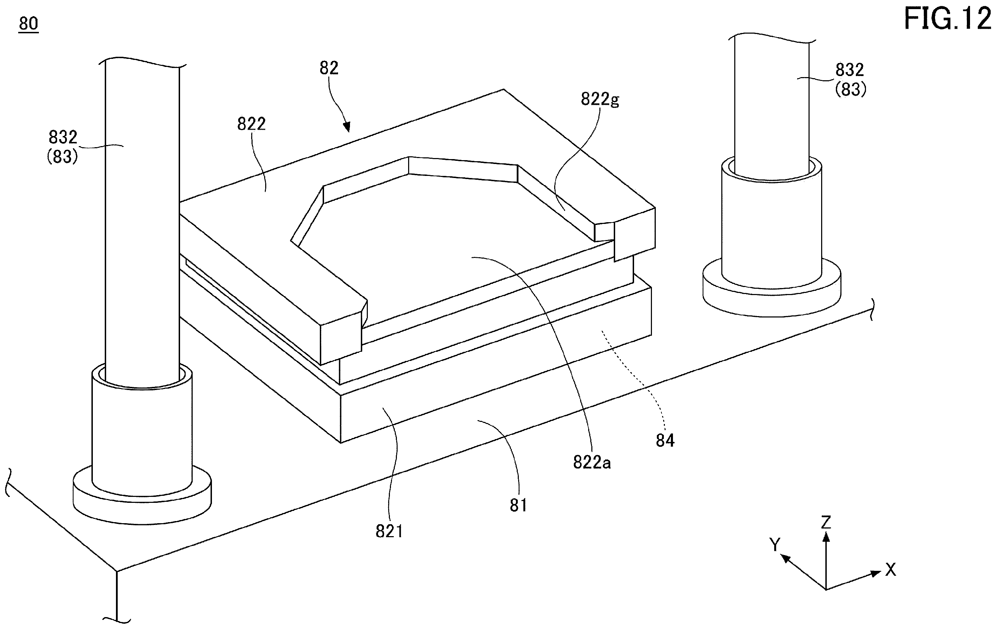

As illustrated in FIG. 12, the placement member 822 is provided with a concave arrangement space 822a that substantially matches the shape of the workpiece 59 (see FIG. 8(B)). The concave arrangement space 822a is open on the side where the robot 20 is installed (the Y-axis negative direction side), and the workpiece 59 can be inserted into the concave arrangement space 822a from the open portion while being horizontally slid. The peripheral wall of the placement member 822 constituting the concave arrangement space 822a functions as a guide wall 822g that guides the sides of the workpiece 59. The guide wall 822g in the innermost area of the concave arrangement space 822a is formed in a shape that matches the opposite sides 42a and the distal end side 42b of the lower plate jig 41 and the opposite sides 52a and the distal end side 52b of the upper plate jig 51.

For this reason, when the workpiece 59 is placed on the placement portion 82, the workpiece 59 enters the innermost area of the concave arrangement space 822a while being guided by the guide wall 822g as the robot 20 slides the workpiece 59. The workpiece 59 can be accurately positioned at the press position of the placement portion 82 by bringing the distal end sides 42b and 52b of the workpiece 59 into contact with the innermost guide wall 822g.

The press body 83 is moved up and down relative to the placement portion 82 by a press operation mechanism in the machine body housing 81a. As illustrated in FIG. 11, the press body 83 includes a movable board 831, a plurality of (four) support posts 832 that support the movable board 831 in an elevatable/lowerable manner, a press support portion 833 installed on the lower surface of the movable board 831, and a presser 834 fixed to the press support portion 833. The press body 83 includes a heater mechanism 84 in the press support portion 833, and the heater mechanism 84 heats the presser 834. The movable board 831 may include a heat radiation fin 835 for radiating heat (of the press support portion 833) on the upper surface.

Each of the support posts 832 protrudes from the inside of the machine body housing 81a, and is connected to the press operation mechanism in the machine body housing 81a. The press operation mechanism includes a drive source (not illustrated), such as a hydraulic cylinder, a pneumatic cylinder, or a motor, and a drive transmission unit (not illustrated) including a plurality of gears and the like. Each of the support posts 832 moves up and down under the operation of the press operation mechanism, and displaces the movable board 831, the press support portion 833, and the presser 834 altogether, while maintaining the horizontal postures of these members.

The presser 834 comes into contact with the upper plate jig 51 of the workpiece 59 when the movable board 831 is lowered. The lower surface of the presser 834 is formed in a flat shape and is in surface contact with the upper surface of the upper plate jig 51 placed on the placement portion 82. The press body 83 descends toward the placement portion 82 to press the workpiece 59, that is, the polymer sandwiched between the lower plate jig 41 and the upper plate jig 51 in the vertical direction (Z-axis direction) in cooperation with the placement portion 82. The press body 83 is raised after pressing and separated from the placement portion 82, so that the workpiece 59 can be taken out. In polymer pressing, the heat press controller 89 (see FIG. 3) controls the press operation mechanism based on a target pressure included in a control command received from the control apparatus **4.**

The heater mechanism 84 of the heat press apparatus 80 is connected to the heat press controller 89 via a temperature control driver (not illustrated), and heating is controlled under the control of the heat press controller 89. The heat press apparatus 80 can adjust the temperature of the placement portion 82 and the temperature of the press body 83 to appropriate target temperatures when pressing a polymer. The heat press apparatus 80 may be configured to include the heater mechanism 84 in only one of the placement portion 82 and the press body 83.

As illustrated in FIG. 3, the cold press apparatus 90 includes, similarly to the heat press apparatus 80, a placement portion 92 that forms a press position (second position) for the workpiece 59 on the upper surface of the machine body housing 91a, and a press body 93 that can approach and separate from the placement portion 92. Further, a press operation mechanism (not illustrated) for operating the press body 93 is provided inside the machine body housing 91a. The cold press apparatus 90 has basically the same configuration as the heat press apparatus 80 except for the configuration for adjusting the temperature, and therefore, a specific description thereof will be omitted.

The cold press apparatus 90 includes a cooling mechanism 94 that cools each of the placement portion 92 and the press body 93. For example, the cooling mechanism 94 may adopt a structure in which an internal flow path is formed in each of the placement portion 92 and the press body 93 to circulate a refrigerant, a structure in which a heat radiation fin is provided in each of the placement portion 92 and the press body 93 to cool the heat radiation fin by air or water, or the like. The cold press apparatus 90 can adjust the temperature of the placement portion 92 and the press body 93 to an appropriate target temperature when pressing a polymer by controlling the cooling mechanism 94 under the control of the cold press controller 99.

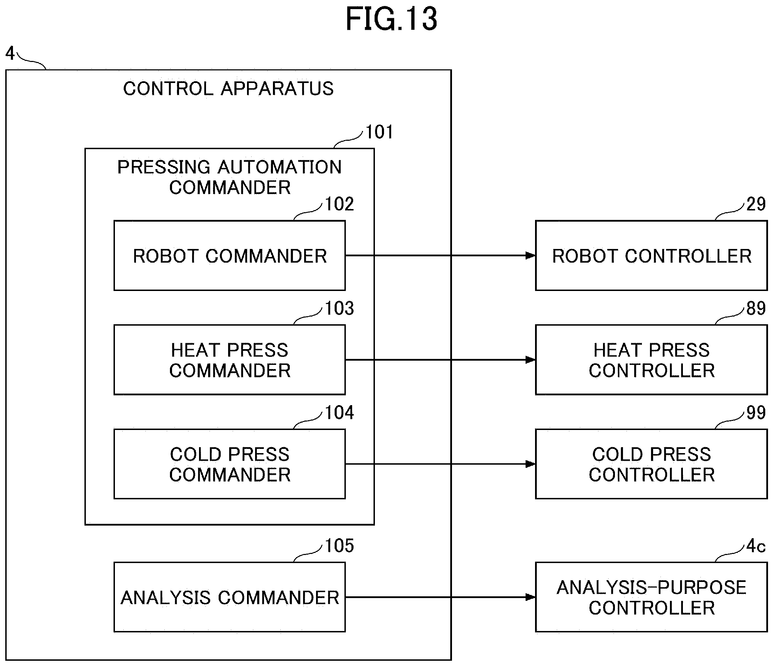

The control apparatus 4 of the sample evaluation system 1 causes the robot 20, the heat press apparatus 80, the cold press apparatus 90, and the analysis apparatus 3 to operate in conjunction with each other. Therefore, as illustrated in FIG. 13, a pressing automation commander 101 and an analysis commander 105 are formed in the control apparatus 4 based on an execution of the program 100 by the processor 4a. Further, a robot commander 102 that generates and outputs a control command for the robot 20, a heat press commander 103 that generates and outputs a control command for the heat press apparatus 80, and a cold press commander 104 that generates and outputs a control command for the cold press apparatus 90 are constructed inside the pressing automation commander 101.

Each commander of the control apparatus 4 receives a procedure of a processing flow of the program 100 and detection information of a plurality of types of sensors (not illustrated) provided in each device of the sample evaluation system 1, and monitors the state of each device. Each commander generates a control command at an appropriate timing and transmits the control command to a designated device, thereby operating each device.

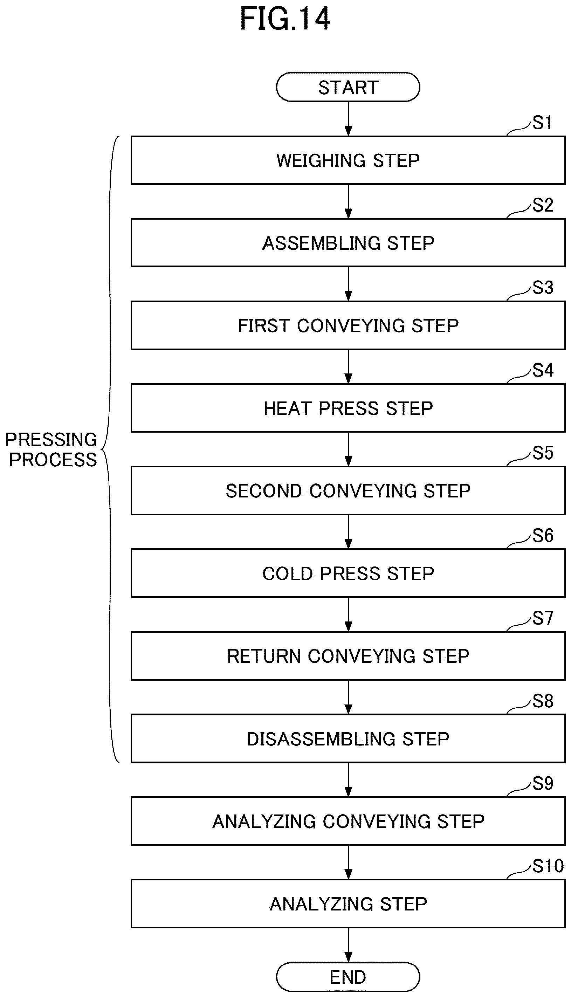

The sample evaluation system 1 (the pressing automation system 2 and the robot system 20A) according to the present embodiment is basically configured as described above, and the operation (a sample evaluation method) thereof will be described below with reference to FIG. 14.

As described above, in the sample evaluation method, the control apparatus 4 of the sample evaluation system 1 first presses a polymer with the pressing automation system 2 to produce a press-formed product (performs pressing process), and then analyzes and evaluates the produced press-formed product with the analysis apparatus 3. Specifically, the control apparatus 4 performs a weighing step (step S1), an assembling step (step S2), a first conveying step (step S3), a heat press step (step S4), a second conveying step (step S5), a cold press step (step S6), a return conveying step (step S7), a disassembling step (step S8), an analyzing conveying step (step S9), and an analyzing step (step S10) in this order (see also FIG. 1).

As illustrated in FIG. 3, in the weighing step (step S1), the pressing automation system 2 weighs a polymer to be evaluated using the weighing device 14 provided on the workbench 10. For example, the control apparatus 4 controls the robot 20 to take out the supply cup 61 set on the workbench 10 and arrange the supply cup 61 in the measurer of the weighing device 14. Further, the control apparatus 4 performs an operation of controlling the robot 20 to put the granular polymer from the container into the supply cup 61 while monitoring the measurement information of the measurer. In this weighing step, the polymer may be weighed manually by an operator so as to have a target weight.

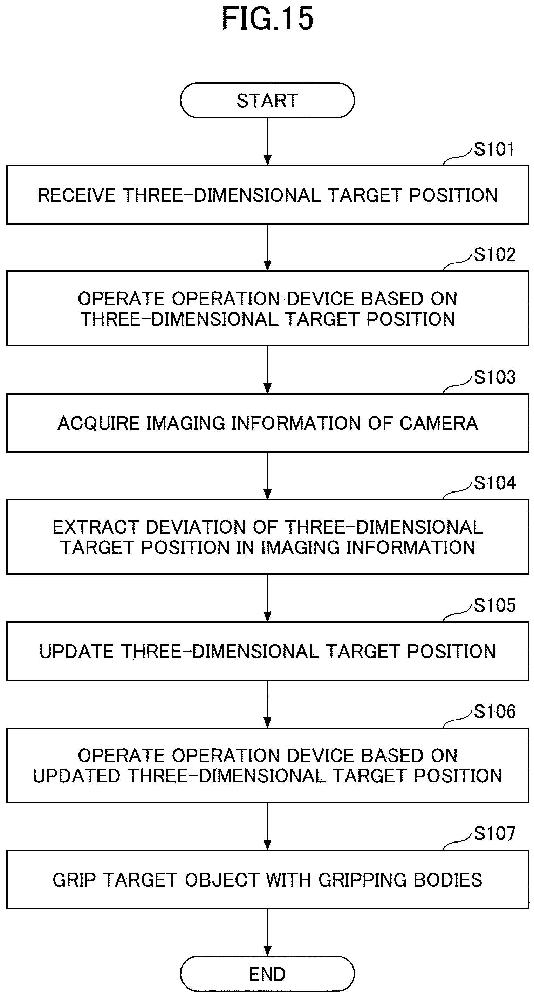

When gripping the jig 19 (the supply cup 61), the robot system 20A adjusts the position of the end effector 25 based on the three-dimensional target position included in the control command and the imaging information acquired from the camera 28 of the end effector 25, and grips the jig 19. Hereinafter, the position correction of the end effector 25 in the robot system 20A will be described with reference to FIG. 15.

When the end effector 25 of the robot system 20A grips the jig 19 or moves the jig 19 to the target position, the robot controller 29 receives the three-dimensional target position and orientation as a control command from the control apparatus 4 (step S101).

Then, the robot controller 29 operates the operation device 21 based on the three-dimensional target position and posture to move the end effector 25 to a position above and near the workbench 10 (step S102).

Then, the robot controller 29 performs imaging with the camera 28 installed in the end effector 25, and acquires imaging information from the camera 28 (step S103). The robot controller 29 performs appropriate image processing on the acquired imaging information.

The imaging information of the image captured above and near the workbench 10 by the camera 28 includes the marker 10m (see FIG. 6) installed on the work-purpose small table 12. The robot controller 29 extracts the marker 10m from the imaging information, and calculates a deviation of the three-dimensional target position based on the relative positions of the marker 10m of the imaging information held in advance and the target jig 19 (step S104).

Further, the robot controller 29 updates the current three-dimensional target position to the three-dimensional target position and posture with the calculated deviation taken into account (step S105). Then, the robot controller 29 corrects the operation content of the operation device 21 according to the updated three dimensional target position and posture, and moves the end effector 25 (step S106). Thus, the robot system 20A can accurately guide the end effector 25 above the workbench 10 according to the imaging information acquired from the camera 28.

In step S107, the robot controller 29 operates the pair of gripping bodies 27 of the end effector 25 to grip the target jig 19 (the supply cup 61). At this time, since the end effector 25 has been moved to the updated three-dimensional target position, the grip 64 of the supply cup 61 and the center line of the end effector 25 substantially coincide with each other. Therefore, the pair of gripping bodies 27 can accurately grip both side surfaces of the grip 64.

In the above example, the operation of gripping the supply cup 61 with the end effector 25 has been described. However, it is a matter of course that the robot system 20A can perform the same operation even when gripping other jigs 19. Alternatively, in the case where a target object gripped by the end effector 25 is conveyed to a target position, the target object can be accurately conveyed to the target position by first moving the end effector 25 based on a three-dimensional target position and using the imaging information acquired from the camera 28 when the target object is near the three-dimensional target position.

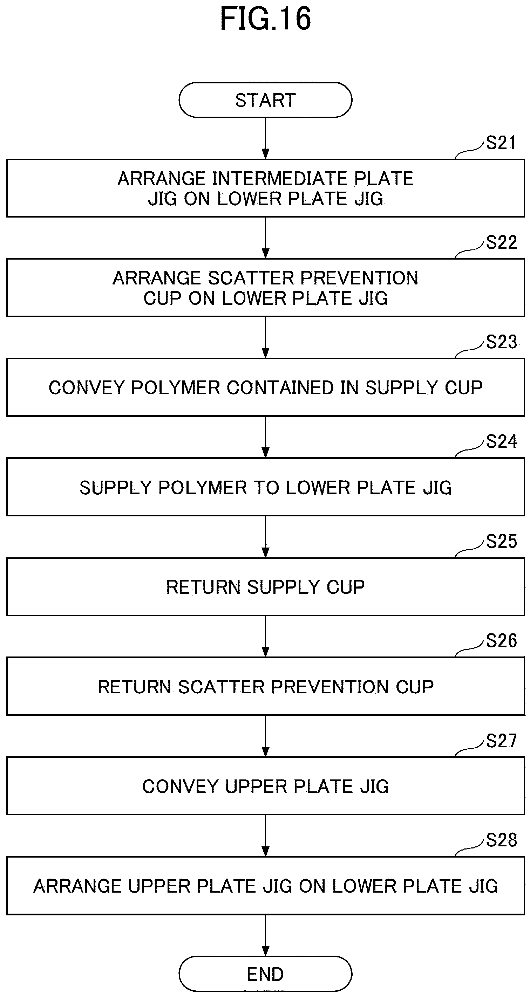

Returning to FIG. 1, in the next assembling step (step S2), the control apparatus 4 assembles the workpiece 59 on the workbench 10 with the robot 20. In the assembly of the workpiece 59, each jig 19 is operated at the position where the lower plate jig 41 is placed by each holder 17 as a base point. In other words, in the assembling step, the placement position of the lower plate jig 41 on the workbench 10 is a set position for assembling the workpiece 59. In the assembling step, the control apparatus 4 assembles the workpiece 59 in accordance with an assembly procedure as illustrated in FIG. 16.

Specifically, the control apparatus 4 first causes the robot 20 to grip the intermediate plate jig 46 and take it out of the holders 17, and then causes the robot 20 to convey the intermediate plate jig 46 to the lower plate jig 41 and place it on the upper surface of the plate body 42 (step S21). Thus, a placement region defined by the hole 47h of the intermediate plate jig 46 is formed on the upper surface of the lower plate jig 41 (see also FIG. 8(A)).

Next, the control apparatus 4 causes the robot 20 to grip the scatter prevention cup 66 and take it out of the holders 17, convey the scatter prevention cup 66 to the lower plate jig 41, and arrange the scatter prevention cup 66 in the hole 47h of the intermediate plate jig 46 (step S22).

Thereafter, the control apparatus 4 causes the robot 20 to grip the supply cup 61 in the weighing device 14 (or the holders 17) and convey the supply cup 61 (step S23). The polymer measured in the weighing step is accommodated in the accommodation space 63 of the supply cup 61. In this conveyance, the robot 20 conveys the supply cup 61 to a position above the scatter prevention cup 66 arranged on the lower plate jig 41.

Then, the control apparatus 4 supplies the polymer to the penetration space 68 of the scatter prevention cup 66 by tilting the supply cup 61 (step S24). At this time, the control apparatus 4 may adjust the relative positions of the scatter prevention cup 66 and the supply cup 61 based on the imaging information acquired from the camera 28, and may control the opening of the supply cup 61 and the opening of the scatter prevention cup 66 to be close to each other. The polymer supplied from the supply cup 61 to the penetration space 68 of the scatter prevention cup 66 collides with the lower plate jig 41 and rebounds, but is prevented from scattering in the surroundings by the cylindrical body 671 of the scatter prevention cup 66.

After the polymer is supplied, the control apparatus 4 returns the supply cup 61 held by the robot 20 to the original position (the holder 17b) (step S25). Further, the control apparatus 4 controls the robot 20 to hold the scatter prevention cup 66 and lift it upward to separate the scatter prevention cup 66 from the lower plate jig 41, and return the scatter prevention cup 66 to the original position (step S26).

Thereafter, the control apparatus 4 causes the robot 20 to grip the fork jig 30 and move the fork jig 30, and causes the fork jig 30 to enter the pair of holding grooves 53 of the upper plate jig 51, thereby conveying the upper plate jig 51 (step S27). At this time, the pair of gripping bodies 27 of the end effector 25 can hold the fork jig 30 in a non-rotatable manner by the holding structure 33 (the gripping-purpose protrusions 274 and the gripping-purpose recesses 321) (see FIG. 5(B)). Therefore, the robot system 20A can stably maintain the posture of the upper plate jig 51 supported by the fork jig 30 and convey the upper plate jig 51.

Finally, the control apparatus 4 places the upper plate jig 51 on the lower plate jig 41 (step S28). At this time, the control apparatus 4 moves the upper plate jig 51 in parallel to the surface direction of the lower plate jig 41, and positions the upper plate jig 51 in such a manner that the shape of the upper plate jig 51 overlaps the shape of the lower plate jig 41. When the upper plate jig 51 is moved, the robot 20 may correct the coordinate position based on the marker 10m included in the imaging information acquired from the camera 28 and perform positioning of the lower plate jig 41 and the upper plate jig 51.

Then, the control apparatus 4 causes the robot 20 to lower the upper plate jig 51, which has been moved to a position immediately above the lower plate jig 41, to a position lower than the protruding position of each frame body 43, and causes the fork jig 30 to retreat in the proximal direction in this lowered state. The guide surface 54 of the upper plate jig 51 is guided by the inclined surface 431 of each frame body 43 in accordance with the withdrawal of the fork jig 30, and the relative position of the upper plate jig 51 with respect to the lower plate jig 41 is aligned (see also FIG. 8(B)).

The pressing automation system 2 can form the workpiece 59 in which the polymer is sandwiched between the lower plate jig 41 and the upper plate jig 51 with good stability and high reproducibility by performing the above-described assembling step. Since the end effector 25 continuously grips the fork jig 30 even after the assembling step, the robot system 20A can smoothly shift to the next first conveying step.

As illustrated in FIG. 1, in the first conveying step (step S3), the control apparatus 4 causes the robot 20 to convey the workpiece 59 assembled in the assembling step to the heat press apparatus 80. At this time, the control apparatus causes the robot 20 to cause the fork jig 30 held by the robot 20 to enter the pair of holding grooves 44 of the lower plate jig 41, thereby lifting the lower plate jig 41. The intermediate plate jig 46 and the upper plate jig 51 are moved integrally with the lower plate jig 41, and the polymer sandwiched therebetween is conveyed without falling off.

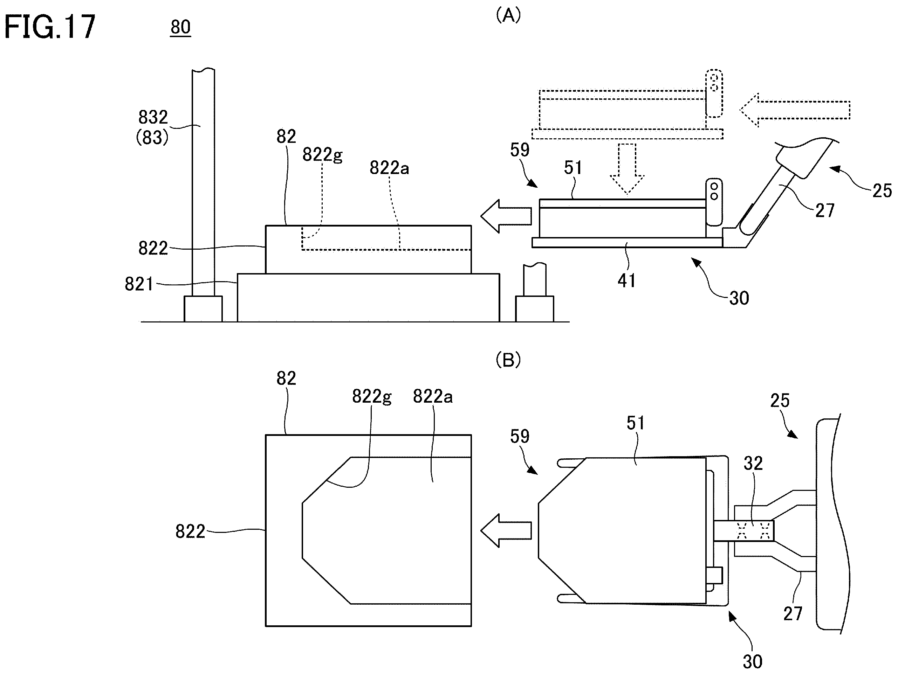

When the workpiece 59 is conveyed to the heat press apparatus 80, the control apparatus 4 adjusts the height positions of the fork jig 30 and the workpiece 59 to the height position of the concave arrangement space 822a of the placement portion 82 as illustrated in FIGS. 17(A) and 17(B). After the height position is adjusted, the control apparatus 4 causes the robot 20 to slide the fork jig 30 and the workpiece 59 in the horizontal direction.

Thus, the workpiece 59 enters the innermost area of the concave arrangement space 822a as the sides of the workpiece 59 are guided by the guide wall 822g of the placement portion 82. Thus, the pressing automation system 2 can accurately position the workpiece 59 with respect to the placement portion 82 (press position). After the workpiece 59 is placed on the placement portion 82, the workpiece 59 protrudes from the upper surface of the placement portion 82 (placement member 822).

Returning to FIG. 1, in the heat press step (step S4), the control apparatus 4 outputs a control command to the heat press controller 89, and presses the workpiece 59 (polymer) under the control of the heat press controller 89. At this time, the heat press apparatus 80 heats the placement portion 82 and the press body 83 to a target temperature with the heater mechanism 84. After the workpiece 59 is placed on the placement portion 82, the robot system 20A returns the fork jig 30 to its original position, and then grips the thermoelectric couple jig 70 and conveys the thermoelectric couple jig 70 to the heat press apparatus 80. The robot system 20A can measure the temperature of the polymer by inserting the detector 73 of the thermoelectric couple jig 70 into the measurement-purpose hole 45 of the workpiece 59 (lower plate jig 41). The control apparatus 4 can adjust the temperature of the heater mechanism 84 by monitoring the measurement information measured by the thermoelectric couple jig 70.

After the temperature of the polymer reaches the target temperature, the heat press apparatus 80 lowers the press body 83 and presses the workpiece 59 at the set target pressure. Thus, the polymer sandwiched between the lower plate jig 41 and the upper plate jig 51 is pressed and formed into a press-formed product on the heat press apparatus 80.

Thereafter, in the second conveying step (step S5), the control apparatus 4 operates the robot 20 to cause the robot 20 to grip and convey the fork jig 30, hold the workpiece 59 on the heat press apparatus 80 with the fork jig 30, and convey the workpiece 59 to the cold press apparatus 90. The conveyance from the placement portion 82 of the heat press apparatus 80 to the placement portion 92 of the cold press apparatus 90 can adopt the same operation as the first conveying step (step S3).

In the cold press step (step S6), the control apparatus 4 outputs a control command to the cold press controller 99, and presses the workpiece 59 (polymer) for the second time under the control of the cold press controller 99. At this time, the cold press apparatus 90 heats the placement portion 92 and the press body 93 to a target temperature with the cooling mechanism 94. Then, after the temperature of the polymer reaches the target temperature based on the measurement information of the thermoelectric couple jig 70, the cold press apparatus 90 lowers the press body 93 and presses the workpiece 59 at the set target pressure. Thus, the polymer sandwiched between the lower plate jig 41 and the upper plate jig 51 is pressed, and a press-formed product obtained by performing pressing twice is produced as the workpiece 59.

Thereafter, in the return conveying step (step S7), the control apparatus 4 operates the robot 20 to grip and convey the fork jig 30, and holds the workpiece 59 on the cold press apparatus 90 with the fork jig 30 and conveys the workpiece 59 to the workbench 10. At this time, the robot 20 places the workpiece 59 at the original set position of the lower plate jig 41 (the position surrounded by the four holders 17a). In other words, the original set position of the lower plate jig 41 is also a disassembly position when the workpiece 59 is disassembled.

In the disassembling step (step S8), the control apparatus 4 operates the robot 20 to disassemble the workpiece 59 in a procedure reverse to the assembling step. At this time, the control apparatus 4 performs an operation of taking out the upper plate jig 51 from the lower plate jig 41 and returning the upper plate jig 51 to the original position, and then taking out the intermediate plate jig 46 from the lower plate jig 41 and returning the intermediate plate jig 46 to the original position. Thus, the press-formed product remains on the upper surface (placement region) of the lower plate jig 41.

In the analyzing conveying step (step S9), the control apparatus 4 causes the robot 20 to convey the press-formed product to the punching-purpose conveyance table 16 and further to the removal apparatus 15 together with the punching-purpose conveyance table 16. In the removal apparatus 15, a process of peeling the press-formed product from the lower plate jig 41 is performed. Then, the sample evaluation system 1 temporarily holds the press-formed product taken out from the lower plate jig 41 in the conveying-purpose small table 13, and conveys the press-formed product to the analysis apparatus 3 by the robot 20 (or another conveyance device (a conveyor or the like), not illustrated) at appropriate timing. The press-formed product may be peeled off manually by an operator, not by the operation of the removal apparatus 15 or the robot 20.

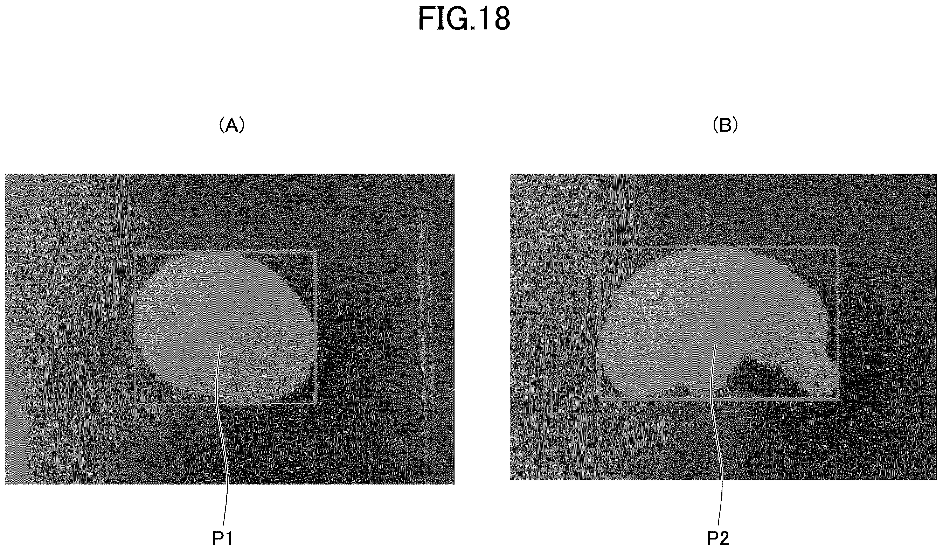

Finally, in the analyzing step (step S10), the control apparatus 4 outputs a control command for performing an appropriate analyzing process to the analyzing apparatus 3 to which the press-formed product has been conveyed, thereby analyzing the press-formed product. For example, as illustrated in FIGS. 18(A) and 18(B), the analysis apparatus 3 captures an image of the press-formed product by an imaging unit (not illustrated), and performs appropriate image processing on the imaging information to calculate the circularity of the press-formed product. FIG. 18(A) illustrates the press-formed product P1 having a high circularity, and FIG. 18(B) illustrates the press-formed product P2 having a low circularity.

The analysis apparatus 3 associates the calculated circularity and thickness of each of the press-formed products P1 and P2, and the like with the conditions of the pressing process (a target pressure of pressing, a heating temperature of the heat press apparatus 80, a length of time of pressing performed by the heat press apparatus 80, a length of time of pressing performed by the cold press apparatus 90, and the like). For example, the control apparatus 4 resets the condition parameters of the pressing process (experiment) based on the polymer evaluation value analyzed by the analysis apparatus 3, and reflects the condition parameters to the next sample evaluation method.

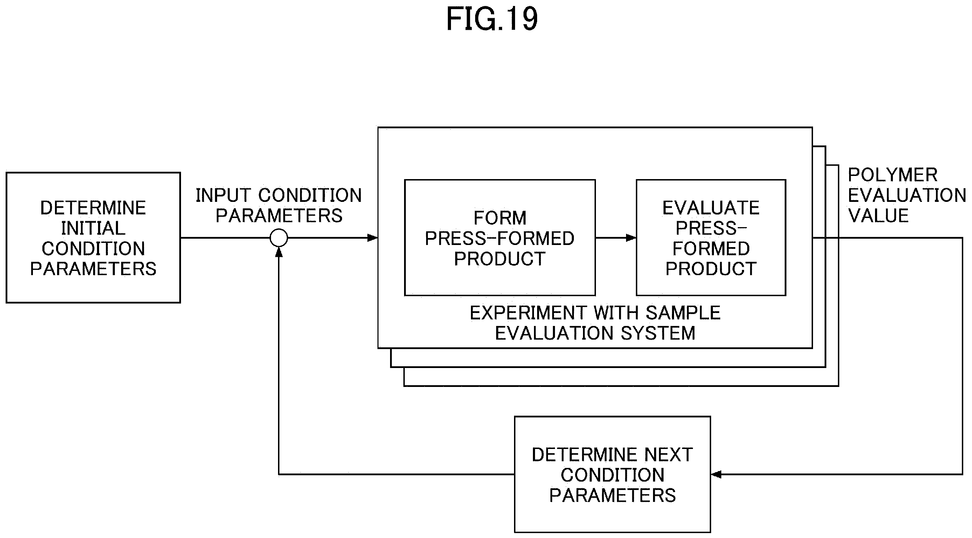

That is, as illustrated in FIG. 19, the control apparatus 4 performs the sample evaluation method using the condition parameters of early cycles of the pressing process (experiment), and repeats feedback for resetting the condition parameters of the experiment a plurality of times based on the obtained analysis result of the press-formed product. Thus, the sample evaluation system 1 can obtain the condition parameters of the pressing process optimal for a sample to be analyzed while significantly reducing a burden on an operator in the evaluation of the sample.

The embodiments disclosed above have the following aspects and effects, for example.

### (Clause 1)

A robot system comprising:
an end effector configured to hold a workpiece;
an operation device connected to the end effector and configured to operate the end effector; and
a control device configured to control an operation of the operation device, wherein
the control device controls:
   a step of assembling the workpiece in a form in which a pressing-target object is sandwiched by arranging the pressing-target object on a first plate jig arranged at a set position and thereafter placing a second plate jig on the first plate jig through operating the end effector; and
   a step of conveying the workpiece to a press position at which the pressing-target object is pressed by holding the pressing-target object, the first plate jig, and the second plate jig altogether as the workpiece with the end effector.

### (Effect of Clause 1)

According to the above-described robot system, it is possible to smoothly perform pressing at the press position, to reduce a work burden on a user, and to improve work efficiency. Furthermore, in the robot system, the pressing-target object (polymer) is sandwiched between the first plate jig and the second plate jig, and thus it is possible to suppress a positional deviation of the pressing-target object and to improve press accuracy.

### (Clause 2)

The robot system according to Clause 1, wherein
the control device controls:
a step of conveying the workpiece to a disassembly position with the end effector by holding the workpiece pressed at the press position; and
a step of separating the second plate jig from the first plate jig by operating the end effector at the disassembly position.

### (Effect of Clause 2)

Thus, the robot system according to Clause 2 can smoothly disassemble a pressed workpiece at the disassembly position, and can further promote the reduction of a burden on the user and the improvement of work efficiency.

### (Clause 3)

The robot system according to Clause 2, wherein
the press position includes a first position at which the pressing-target object is pressed while being heated, and
in the step of conveying the workpiece, the control device causes the workpiece to be conveyed to the first position and, after the workpiece is being pressed, causes the workpiece to be conveyed to the disassembly position.

### (Effect of Clause 3)

Thus, the robot system can press a pressing-target object (polymer) while heating the pressing-target object at the first position, and then immediately return the workpiece to the disassembly position to obtain a press-formed product.

### (Clause 4)

The robot system according to Clause 1 or 2, wherein
the press position includes a first position at which the pressing-target object is pressed while being heated and a second position at which the pressing-target object is pressed while being cooled, and
in the step of conveying the workpiece, the control device causes the workpiece to be conveyed to the first position first, and after the workpiece is pressed at the first position, causes the workpiece to be conveyed from the first position to the second position.

### (Effect of Clause 4)

Thus, the robot system can press a pressing-target object (polymer) while heating a pressing-target object at the first position and then press the pressing-target object while cooling the pressing-target object at the second position. As a result, the robot system can accurately create a press-formed product in accordance with a target temperature.

### (Clause 5)

The robot system according to any one of Clauses 1 to 4, wherein
the end effector includes an imaging device configured to capture an image of a target object and transmit imaging information to the control device, and
the control device controls the end effector to move to a target position based on information of position coordinates of the target object that is held in advance, and corrects a positional deviation of the end effector with respect to the target position based on the imaging information.

### (Effect of Clause 5)

Thus, the robot system can accurately perform gripping of a target object with the end effector.

### (Clause 6)

The robot system according to Clause 5, wherein
the target object includes a feature point of a workbench on which the first plate jig and the second plate jig are placed or a feature point installed at the press apparatus.

### (Effect of Clause 6)

Thus, the robot system can accurately move the end effector with respect to the position of the jig (the first plate jig or the second plate jig) of the workbench or the press position based on the feature point included in the imaging information.

### (Clause 7)

The robot system according to any one of Clauses 1 to 6, wherein
in the step of assembling the workpiece, the control device causes the second plate jig to be moved in parallel to a surface direction of the first plate jig so as to face the first plate jig.

### (Effect of Clause 7)

Thus, the robot system can smoothly assemble the first plate jig and the second plate jig.

### (Clause 8)

The robot system according to any one of Clauses 1 to 7, wherein
one of the first plate jig and the second plate jig has a frame body, and the other of the first plate jig and the second plate jig has a guide surface guided by the frame body, and
in the step of assembling the workpiece, the control device causes the guide surface to be into contact with the frame body when causing the second plate jig to be moved with respect to the first plate jig.

### (Effect of Clause 8)

Thus, even when the second plate jig is displaced from the first plate jig at the time of moving the second plate jig, the robot system can guide and position the relative positions of the first plate jig and the second plate jig by the frame bodies and the guide surface.

### (Clause 9)

The robot system according to any one of Clauses 1 to 8, wherein
the press position has a concave arrangement space that matches a shape of a distal end of the first plate jig in an entering direction in which the workpiece enters the press position, and
in a step of conveying the workpiece to the press position, the control device positions the workpiece by causing the workpiece to be moved in a horizontal direction and bringing the workpiece into contact with a guide wall constituting the concave arrangement space.

### (Effect of Clause 9)

Thus, when moving the workpiece to the arrangement concave space, the robot system can guide the workpiece by the guide wall and accurately position the workpiece at the press position.

### (Clause 10)

The robot system according to any one of Clauses 1 to 9, wherein
in a step of assembling the workpiece, the control device causes the pressing-target object to be placed on the first plate jig by causing a cylindrical body to be placed on the first plate jig and subsequently causing the pressing-target object to be placed inside the cylindrical body, and
after the cylindrical body is taken out, the control device causes the second plate jig to be arranged on the first plate **jig.**

### (Effect of Clause 10)

Thus, the robot system can favorably prevent the pressing-target object from scattering out of the first plate jig in the step of assembling the workpiece.

### (Clause 11)

The robot system according to any one of Clauses 1 to 10, wherein
the end effector includes a pair of gripping bodies configured to be moved close to and away from each other under an operation command of the control device, and
the control device switches a jig having a grip configured to be gripped by the pair of gripping bodies to another jig having a grip in an operation of arranging the pressing-target object on the first plate jig and an operation of overlaying the second plate jig on the first plate jig.

### (Effect of Clause 11)

Thus, the robot system can assemble the workpiece easily and in a short time by switching the jigs between an operation of arranging a pressing-target object on the first plate jig and an operation of overlaying the second plate jig on the first plate jig.

### (Clause 12)

The robot system according to Clause 11, wherein
the plurality of jigs include:
a supply cup that accommodates the pressing-target object; and
a fork jig having a plurality of forks configured to enter under the first plate jig or the second plate jig and lift the first plate jig or the second plate jig.

### (Effect of Clause 12)

Thus, the robot system can easily perform an operation of arranging the pressing-target object on the first plate jig and an operation of holding the first plate jig and the second plate jig.

### (Clause 13)

The robot system according to Clause 11 or 12, wherein
the plurality of jigs include a temperature detector configured to detect a temperature of the workpiece, and
the control device causes the temperature detector to be gripped by the pair of gripping bodies and inserted into the workpiece arranged at the press position.

### (Effect of Clause 13)

Thus, the robot system can measure a temperature of the pressing-target object by the temperature detector at the time of pressing a workpiece, and can perform pressing at an appropriate temperature.

### (Clause 14)

A pressing automation system, comprising:
a robot including an end effector configured to hold a workpiece and an operation device connected to the end effector and configured to operate the end effector;
a press apparatus configured to press a pressing-target object accommodated in the workpiece conveyed by the robot; and
a control device configured to control the robot and the press apparatus, wherein
the control device controls:
   a step of assembling the workpiece in a form in which a pressing-target object is sandwiched by arranging the pressing-target object on a first plate jig arranged at a set position and thereafter placing a second plate jig on the first plate jig through operating the end effector;
   a step of conveying the workpiece from the set position to the press apparatus by holding the pressing-target object, the first plate jig, and the second plate jig altogether as the workpiece with the end effector; and
   a step of pressing the pressing-target object by pressing the first plate jig and the second plate jig by the press apparatus.

### (Effect of Clause 14)

Thus, the pressing automation system can promote reduction in a work load on a user, improvement in work efficiency, improvement in press accuracy, and the like.

### (Clause 15)

A program configured to cause a computer to function as:
a robot commander configured to output to a robot system a command to
   assemble a workpiece in a form in which a pressing-target object is sandwiched by arranging the pressing-target object on a first plate jig arranged at a set position and thereafter placing a second plate jig on the first plate jig through operating an end effector at a set position at which the workpiece is set, and
   convey the workpiece from the set position to a press apparatus by holding the pressing-target object, the first plate jig, and the second plate jig altogether as the workpiece with the end effector;
a press commander configured to output to the press apparatus a command to press the pressing-target object; and
an analysis commander configured to output to an analysis apparatus a command to analyze the pressed pressing-target object.

### (Effect of Clause 15)

Thus, the program can cause both the robot system and the analysis apparatus to operate in conjunction with each other, and can promote reduction in a work load on a user, improvement in work efficiency, improvement in press accuracy, and the like.

### (Clause 16)

A pressing-purpose jig that is conveyed to a press apparatus while holding a pressing-target object and is pressed by the press apparatus, the pressing-purpose jig comprising:
a first plate jig on which the pressing-target object is arranged at a set position; and
a second plate jig that forms a workpiece in a form in which the pressing-target object is sandwiched between the first plate jig and the second plate jig by being placed on the first plate jig on which the pressing-target object is arranged, wherein
the pressing-purpose jig in a form in which the pressing-target object is sandwiched between the first plate jig and the second plate jig is configured to be conveyed to the press apparatus, and
the pressing-purpose jig is configured to press the pressing-target object when the press apparatus presses the first plate jig and the second plate jig the pressing-purpose jig is arranged at the press apparatus.

### (Effect of Clause 16)

Thus, the pressing-purpose jig is conveyed to the pressing position while stably holding the workpiece, and is pressed at the pressing position, so that reduction of a work burden on a user, improvement of work efficiency, improvement of pressing accuracy, and the like can be promoted.

The pressing automation system 2, the robot system 20A, the pressing-purpose jigs 40, and the program 100 according to the embodiment disclosed herein are merely examples in all respects, and are not restrictive. The embodiments can be modified and improved in various forms without departing from the scope and spirit of the appended claims. The matters described in the plurality of embodiments can be combined with each other within a range not inconsistent with each other.

The present international application claims priority based on Japanese Patent Application No. 2022-140333 filed on September 2, 2022, the entire contents of which are incorporated herein by reference.

### REFERENCE SIGNS LIST

- 4: Control apparatus
- 20: Robot
- 20A: Robot system
- 21: Operation device
- 25: End effector
- 40: Pressing-purpose jig
- 41: Lower plate jig (first plate jig)
- 51: Upper plate jig (second plate jig)
- 59: Workpiece

## Claims

1. A robot system comprising:
an end effector configured to hold a workpiece;
an operation device connected to the end effector and configured to operate the end effector; and
a control device configured to control an operation of the operation device, wherein
the control device controls:
a step of assembling the workpiece in a form in which a pressing-target object is sandwiched by arranging the pressing-target object on a first plate jig arranged at a set position and thereafter placing a second plate jig on the first plate jig through operating the end effector; and
a step of conveying the workpiece to a press position at which the pressing-target object is pressed by holding the pressing-target object, the first plate jig, and the second plate jig altogether as the workpiece with the end effector.

2. The robot system according to claim 1, wherein
the control device controls:
a step of conveying the workpiece to a disassembly position with the end effector by holding the workpiece pressed at the press position; and
a step of separating the second plate jig from the first plate jig by operating the end effector at the disassembly position.

3. The robot system according to claim 2, wherein
the press position includes a first position at which the pressing-target object is pressed while being heated, and
in the step of conveying the workpiece, the control device causes the workpiece to be conveyed to the first position and, after the workpiece is being pressed, causes the workpiece to be conveyed to the disassembly position.

4. The robot system according to claim 1, wherein
the press position includes a first position at which the pressing-target object is pressed while being heated and a second position at which the pressing-target object is pressed while being cooled, and
in the step of conveying the workpiece, the control device causes the workpiece to be conveyed to the first position first, and after the workpiece is pressed at the first position, causes the workpiece to be conveyed from the first position to the second position.

5. The robot system according to claim 1, wherein
the end effector includes an imaging device configured to capture an image of a target object and transmit imaging information to the control device, and
the control device controls the end effector to move to a target position based on information of position coordinates of the target object that is held in advance, and corrects a positional deviation of the end effector with respect to the target position based on the imaging information.

6. The robot system according to claim 5, wherein
the target object includes a feature point of a workbench on which the first plate jig and the second plate jig are placed or a feature point installed at the press apparatus.

7. The robot system according to claim 1, wherein
in the step of assembling the workpiece, the control device causes the second plate jig to be moved in parallel to a surface direction of the first plate jig so as to face the first plate jig.

8. The robot system according to claim 1, wherein
one of the first plate jig and the second plate jig has a frame body, and the other of the first plate jig and the second plate jig has a guide surface guided by the frame body, and
in the step of assembling the workpiece, the control device causes the guide surface to be into contact with the frame body when causing the second plate jig to be moved with respect to the first plate jig.

9. The robot system according to claim **1,** wherein
the press position has a concave arrangement space that matches a shape of a distal end of the first plate jig in an entering direction in which the workpiece enters the press position, and
in a step of conveying the workpiece to the press position, the control device positions the workpiece by causing the workpiece to be moved in a horizontal direction and bringing the workpiece into contact with a guide wall constituting the concave arrangement space.

10. The robot system according to claim 1, wherein
in a step of assembling the workpiece,
the control device causes the pressing-target object to be placed on the first plate jig by causing a cylindrical body to be placed on the first plate jig and subsequently causing the pressing-target object to be placed inside the cylindrical body, and
after the cylindrical body is taken out, the control device causes the second plate jig to be arranged on the first plate jig.

11. The robot system according to any one of claims 1 to 10, wherein
the end effector includes a pair of gripping bodies configured to be moved close to and away from each other under an operation command of the control device, and
the control device switches a jig having a grip configured to be gripped by the pair of gripping bodies to another jig having a grip in an operation of arranging the pressing-target object on the first plate jig and an operation of overlaying the second plate jig on the first plate jig.

12. The robot system according to claim 11, wherein
the plurality of jigs include:
a supply cup that accommodates the pressing-target object; and
a fork jig having a plurality of forks configured to enter under the first plate jig or the second plate jig and lift the first plate jig or the second plate jig.

13. The robot system according to claim 11, wherein
the plurality of jigs include a temperature detector configured to detect a temperature of the workpiece, and
the control device causes the temperature detector to be gripped by the pair of gripping bodies and inserted into the workpiece arranged at the press position.

14. A pressing automation system, comprising:
a robot including an end effector configured to hold a workpiece and an operation device connected to the end effector and configured to operate the end effector;
a press apparatus configured to press a pressing-target object accommodated in the workpiece conveyed by the robot; and
a control device configured to control the robot and the press apparatus, wherein
the control device controls:
a step of assembling the workpiece in a form in which a pressing-target object is sandwiched by arranging the pressing-target object on a first plate jig arranged at a set position and thereafter placing a second plate jig on the first plate jig through operating the end effector;
a step of conveying the workpiece from the set position to the press apparatus by holding the pressing-target object, the first plate jig, and the second plate jig altogether as the workpiece with the end effector; and
a step of pressing the pressing-target object by pressing the first plate jig and the second plate jig by the press apparatus.

15. A program configured to cause a computer to function as:
a robot commander configured to output to a robot system a command to
assemble a workpiece in a form in which a pressing-target object is sandwiched by arranging the pressing-target object on a first plate jig arranged at a set position and thereafter placing a second plate jig on the first plate jig through operating an end effector at a set position at which the workpiece is set, and
convey the workpiece from the set position to a press apparatus by holding the pressing-target object, the first plate jig, and the second plate jig altogether as the workpiece with the end effector;
a press commander configured to output to the press apparatus a command to press the pressing-target object; and
an analysis commander configured to output to an analysis apparatus a command to analyze the pressed pressing-target object.

16. A pressing-purpose jig that is conveyed to a press apparatus while holding a pressing-target object and is pressed by the press apparatus, the pressing-purpose jig comprising:
a first plate jig on which the pressing-target object is arranged at a set position; and
a second plate jig that forms a workpiece in a form in which the pressing-target object is sandwiched between the first plate jig and the second plate jig by being placed on the first plate jig on which the pressing-target object is arranged, wherein
the pressing-purpose jig in a form in which the pressing-target object is sandwiched between the first plate jig and the second plate jig is configured to be conveyed to the press apparatus, and
the pressing-purpose jig is configured to press the pressing-target object when the press apparatus presses the first plate jig and the second plate jig the pressing-purpose jig is arranged at the press apparatus.
